(19) **Europäisches Patentamt**
**European Patent Office**
**Office européen des brevets**

(11) **EP 1 557 694 B1**

(12) **EUROPÄISCHE PATENTSCHRIFT**

(45) Veröffentlichungstag und Bekanntmachung des Hinweises auf die Patenterteilung:
**08.10.2008   Patentblatt 2008/41**

(21) Anmeldenummer: **05001436.4**

(22) Anmeldetag: **25.01.2005**

(51) Int Cl.:
*G01S 17/93* (2006.01)    *G01S 7/48* (2006.01)
*G01S 13/93* (2006.01)    *G01S 7/41* (2006.01)

(54) **Verfahren zur Klassifizierung von Objekten**

Object sorting process

Procédé de classement d'objets

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **26.01.2004   DE 102004003870**

(43) Veröffentlichungstag der Anmeldung:
**27.07.2005   Patentblatt 2005/30**

(73) Patentinhaber: **IBEO Automobile Sensor GmbH**
**22179 Hamburg (DE)**

(72) Erfinder:
• **Fürstenberg, Kay**
**89075 Ulm (DE)**
• **Kämpchen, Nico**
**89081 Ulm (DE)**
• **Lages, Ulrich, Dr.**
**21031 Hamburg (DE)**
• **Dietmayer, Klaus, Prof. Dr.**
**89075 Ulm (DE)**

(74) Vertreter: **Manitz, Finsterwald & Partner GbR**
**Postfach 31 02 20**
**80102 München (DE)**

(56) Entgegenhaltungen:
EP-A- 1 094 336        US-A1- 2001 052 844
US-A1- 2003 103 197

**Beschreibung**

Die vorliegende Erfindung betrifft ein Verfahren zur Klassifizierung von Objekten, die Gegenständen im Erfassungsbereich eines Sensors für elektromagnetische Strahlung, insbesondere eines Laserscanners, entsprechen, auf der Basis wenigstens eines von dem Sensor erfassten Abstandsbildes des Erfassungsbereichs, gemäß Anspruch 1 sowie eine Vorrichtung gemäß Anspruch 25.

Verfahren der oben genannten Art sind grundsätzlich bekannt und werden häufig in Verbindung mit Objektverfolgungsverfahren eingesetzt. Sie können dazu dienen, Gegenstände in dem Erfassungsbereich zu erkennen bzw. diesen Objektklassen zuzuordnen.

Dazu werden mittels des Sensors Abstandsbilder des Erfassungsbereichs erfasst, die jeweils eine Menge von Abstandsbildpunkten, die bei einer Abtastung des Erfassungsbereichs erhalten wurden, umfassen. Ein Abstandsbildpunkt kann dabei insbesondere Daten in Bezug auf die relative Lage eines von dem Sensor erfassten Punktes oder Bereichs auf einem Gegenstand zu dem Sensor enthalten, aus denen insbesondere der Abstand des jeweiligen Punktes bzw. Bereichs von dem Sensor ermittelbar ist. In einem Abstandsbild werden Objekte ermittelt, die einer Anordnung von Abstandsbildpunkten entsprechen, die wenigstens ein vorgegebenes Kriterium zur Objektbildung erfüllen. Den realen Gegenständen entsprechen dabei unter Verwendung von Abstandsbildpunkten bzw. in den Abstandsbildern definierten Objekten. Die Objekte besitzen in diesem Stadium außer ihrer durch die ihnen jeweils zugeordneten Abstandsbildpunkte gegebenen Kontur keine weitere Eigenschaft. Zur besseren Interpretation der Abstandsbilder ist es wünschenswert, weitere Informationen über die Objekte, beispielsweise deren Typ zu erhalten. Dazu werden den Objekten, soweit möglich, den Typen entsprechende Objektklassen zugeordnet.

Verfahren der oben genannten Art können beispielsweise im Straßenverkehr eingesetzt werden, um gegebenenfalls in Verbindung mit Verfahren zur Objektverfolgung einen Überwachungsbereich vor einem Kraftfahrzeug zu überwachen und in diesem Überwachungsbereich auftretende Gegenstände zu erkennen und verfolgen. Bei den Gegenständen kann es sich beispielsweise neben Fußgängern, die der Einfachheit halber im Rahmen der vorliegenden Erfindung auch als Gegenstände angesehen werden, um Personenkraftwagen, Motorräder, Lastkraftwagen, Leitpfosten, Bäume usw. handeln. Um die Situation in dem Überwachungsbereich bewerten zu können und gegebenenfalls auch eine Objektverfolgung vereinfachen oder verbessern zu können, ist es sinnvoll, den Objekten entsprechende Objektklassen zuzuordnen. Hierzu kann die Information aus einem Abstandsbild verwendet werden, die jedoch häufig keine Unterscheidung zwischen Objekten bzw. Gegenständen mit im Abstandsbild ähnlicher Kontur, beispielsweise einem Leitpfosten und einem Laternenpfahl, zulässt.

Bei der Überwachung ist es jedoch wünschenswert, dass Objekte möglichst schnell und sicher klassifiziert werden können, so dass eine automatische Bewertung der Situation in dem Überwachungsbereich schnell und zutreffend erfolgen kann.

EP 1 094 336 A2 beschreibt ein Verfahren zur Erkennung von Objekten, insbesondere von vorausfahrenden Fahrzeugen, mittels Radar. Handelt es sich bei dem vorausfahrenden Fahrzeug um einen Pkw mit Stufenheck, wird ein Auswertesignal mit zwei Peaks erhalten. Handelt es sich bei dem vorausfahrenden Fahrzeug hingegen um einen Lkw, wird ein Signal mit lediglich einem Peak erhalten. Durch die Signalform kann zwischen verschiedenen Fahrzeugtypen unterschieden werden. Das Auswertesignal entspricht dabei der Frequenzdifferenz $\Delta f$ zwischen der Frequenz einer von einer Antenne mit steigender Frequenz ausgesandten Strahlung und der Frequenz der an den Objekten reflektierten Strahlung, die entsprechend der Länge ihres Laufweges der jeweils aktuellen Frequenz der ausgesandten Strahlung hinterherläuft.

US 2001/0052844 A1 beschreibt ein Verfahren zur Erkennung von Objekten, insbesondere von vorausfahrenden Fahrzeugen. Ein Laserradarsensor und ein Mikrocomputer erzeugen Messdaten, die jeweils den Winkel eines Objekts, den Abstand zu dem Objekt und die Echopulsbreite umfassen. Die Echopulsbreiten werden dazu verwendet, reflektierte Strahlung in einen "gestreuten" und einen "ungestreuten" Anteil zu trennen, wobei der gestreute Anteil dadurch entsteht, dass der Laserstrahl auf eine linsenähnliche Wasserausbildung auf der Glasplatte des Laserradarsensors trifft.

Der vorliegenden Erfindung liegt daher die Aufgabe zugrunde, ein Verfahren der oben genannten Art bereitzustellen, das eine schnelle und zuverlässige Klassifizierung von Objekten erlaubt.

Die Aufgabe wird gelöst durch ein Verfahren der oben genannten Art mit den Merkmalen des Anspruchs 1 sowie durch eine Vorrichtung mit den Merkmalen des Anspruchs 25.

Bei dem erfindungsgemäßen Verfahren zur Klassifizierung von Objekten, die Gegenständen im Erfassungsbereich eines Sensors für elektromagnetische Strahlung, insbesondere eines Laserscanners, entsprechen, auf der Basis wenigstens eines von dem Sensor erfassten Abstandsbildes des Erfassungsbereichs mit Abstandsbildpunkten, die jeweils durch Aussendung eines Pulses elektromagnetischer Strahlung und Detektion des von einem Punkt oder Bereich auf einem Gegenstand jeweils als Echopuls zurückgeworfenen Pulses sowie Erfassung wenigstens einer von der Energie des Echopulses abhängigen Echopulseigenschaft des Echopulses erhalten wurden und denen jeweils wenigstens ein Wert für einen Parameter für die Echopulseigenschaft zugeordnet ist, werden wenigstens einem Objekt Abstandsbildpunkte des Abstandsbildes zugeordnet, und es wird dem Objekt in Abhängigkeit von wenigstens einem der Parameterwerte für die Echopulseigenschaft, die den dem Objekt zugeordneten Abstandsbildpunkten zugeordnet sind, wenigstens eine Objektklasse zugeordnet.

Unter einem Abstandsbild eines Sensors zur Erfassung elektromagnetischer Strahlung, das häufig auch als tiefenaufgelöstes Bild oder Entfernungsbild bezeichnet wird, wird eine Menge von bei einer Abtastung des Erfassungsbereichs des Sensors erfassten Abstandsbildpunkten verstanden, denen Punkte bzw., je nach Auflösung des Sensors, auch Bereiche eines von dem Sensor erfassten Gegenstands bzw. der Oberfläche des Gegenstands entsprechen. Die Abstandsbildpunkte, die im Folgenden der Einfachheit halber auch als Bildpunkte bezeichnet werden, umfassen dabei wenigstens der Lage der zugehörigen Gegenstandspunkte bzw. -bereiche entsprechende Koordinaten zur Definition einer Lage dieser Gegenstandspunkte bzw. -bereiche beispielsweise relativ zu dem Sensor wenigstens in einer Fläche, vorzugsweise einer Ebene, die nicht orthogonal zu einer Blickrichtung des Sensors orientiert ist. Aus den Koordinaten kann insbesondere der Abstand der Gegenstandspunkte bzw. -bereiche von dem Sensor ermittelbar sein. Regionen des Erfassungsbereichs, in denen keine Gegenstände vorhanden sind, können, je nach Sensor, trotzdem Abstandsbildpunkte zugeordnet sein, die dann entsprechend gekennzeichnet sein können.

Die Sensoren für elektromagnetische Strahlung zur Erfassung solcher Abstandsbilder sind grundsätzlich bekannt. Bei diesen kann es sich bevorzugt um optoelektronische Sensoren handeln, die eine gute Ortsauflösung bieten und daher für das erfindungsgemäße Verfahren bevorzugt sind.

Für das erfindungsgemäße Verfahren werden insbesondere Abstandsbilder verwendet, bei denen zur Erfassung von Abstandsbildpunkten Pulse elektromagnetischer Strahlung ausgesendet werden, die gegebenenfalls durch einen Punkt oder Bereich auf einem Gegenstand wenigstens teilweise als Echopuls zurückgeworfen und durch den Sensor detektiert werden. Aus der Laufzeit der Pulse von dem Sensor zu dem Punkt oder dem Bereich auf dem Gegenstand und zurück zu dem Sensor kann dann der Abstand des Punktes oder Bereichs von dem Sensor ermittelt werden.

Vorzugsweise wird daher als Sensor ein Laserscanner verwendet, der bei einer Abtastung den Erfassungsbereich mit mindestens einem gepulsten Strahlungsbündel abtastet, das einen vorgegebenen Winkelbereich, vorzugsweise mit einer Schwenkbewegung, überstreicht, und von einem Punkt bzw. Bereich eines Gegenstands zurückgeworfene Strahlungspulse des Strahlungsbündels detektiert. Die für einen Abstandsbildpunkt erfassten Abtastdaten können dann als Koordinaten den Winkel, bei dem der Echopuls erfasst wurde, und die aus der Laufzeit des Pulses bzw. Echopulses bestimmte Entfernung des Gegenstandspunktes bzw. -bereichs von dem Laserscanner erhalten. Bei der elektromagnetischen Strahlung kann es sich insbesondere um sichtbares oder infrarotes Licht handeln.

Bei der Umsetzung der bei der Abtastung erhaltenen Abtastdaten in Abstandsbildpunkte können Korrekturen, zum Beispiel in Bezug auf die Bewegung des Sensors, vorgenommen werden, jedoch ist dies nicht notwendig.

Bei dem erfindungsgemäßen Verfahren wird davon ausgegangen, dass die Energie der ausgesendeten Pulse jeweils fest vorgegeben oder bekannt ist. Die Echopulse weisen dann eine Echopulsenergie auf, die zum einen von den Eigenschaften des von dem Sensor abgegebenen Pulses, insbesondere dessen Form und Energie, und zum anderen beispielsweise von der Größe des Bereichs auf dem Gegenstand, von dem der Puls zurückgeworfen wird, der Neigung des Bereichs gegenüber der Ausbreitungsrichtung des Pulses und den optischen Eigenschaften der Oberfläche des Bereichs, nämlich dessen Remissionseigenschaften, abhängt. Um zusätzliche Informationen über Gegenstände bzw. Bereiche auf Gegenständen zu erhalten, werden daher bei dem erfindungsgemäßen Verfahren Abstandsbilder verwendet, bei denen den Abstandsbildpunkten jeweils wenigstens ein Wert für einen Parameter für eine Echopulseigenschaft zugeordnet ist, die von der Energie des Echopulses abhängt. Die Echopulseigenschaft braucht dabei nicht unbedingt ausschließlich von der Energie des Echopulses abzuhängen.

Da der Echopuls räumlich gesehen einen Querschnitt aufweisen kann, der größer ist als ein Empfangselement und zusätzlich in Abhängigkeit von den Eigenschaften des Gegenstandspunktes variieren kann, wird im Rahmen der Erfindung unter der Echopulsenergie jeweils die von dem Sensor empfangbare Energie des Echopulses verstanden, die bedingt durch die verglichen mit dem Strahlquerschnitt des Echopulses oft kleine Fläche des Empfangselements gegenüber der tatsächlichen, über den gesamten Strahlquerschnitt des Echopulses integrierten Energiedichte reduziert sein kann.

Erfindungsgemäß werden wenigstens einem Objekt Abstandsbildpunkte des Abstandsbildes zugeordnet. Dies kann insbesondere dadurch geschehen, dass unter den Abstandsbildpunkten des Abstandsbildes jeweils solche Abstandsbildpunkte gesucht werden, die wenigstens ein Kriterium zur Bildung eines Objekts bzw. zur Zuordnung von Abstandsbildpunkten zu dem Objekt erfüllen. Dies kann sich beispielsweise auf die Abstände der einem Objekt zuzuordnenden Abstandsbildpunkte voneinander beziehen. Insbesondere können hierzu Verfahren eingesetzt werden, die aus bekannten Objektverfolgungsverfahren bekannt sind. Die so dem Objekt zugeordneten Abstandsbildpunkte bestimmen gleichzeitig die Lage des Objekts.

Darüber hinaus sind durch die Zuordnung der Abstandsbildpunkte auch die den Abstandsbildpunkten entsprechenden Parameterwerte für die Echopulseigenschaft dem Objekt zugeordnet, so dass für ein Objekt nicht nur die durch die ihm zugeordneten Abstandsbildpunkte gegebene Kontur, sondern auch ein Verlauf der Parameterwerte für die Echopulseigenschaft über die so gegebene Kontur zugeordnet ist.

Erfindungsgemäß wird nun dem Objekt wenigstens eine Objektklasse in Abhängigkeit von wenigstens einem Parameterwert für die Echopulseigenschaft, der dem Objekt über den zugeordneten Abstandsbildpunkt zugeordnet ist, zugeordnet. Diese Zuordnung ist auch als Einordnung des Objekts in eine Objektklasse aufzufassen.

Für die vorgegebene Objektklasse wird dabei wenigstens ein Zuordnungskriterium vorgegeben, das ein Objekt erfüllen muss, damit diesem die Objektklasse zugeordnet werden kann. Dabei braucht die Zuordnung nicht unbedingt allein auf der Basis eines Zuordnungskriteriums zu erfolgen, vielmehr können auch noch weitere Zuordnungskriterien eine Rolle spielen, so dass eine Objektklasse einem Objekt nur bei Erfüllung mehrerer Zuordnungskriterien zugeordnet wird, die der Objektklasse entsprechen. Insofern wird durch die Vorgabe eines Zuordnungskriteriums oder mehrerer Zuordnungskriterien für eine Objektklasse die Objektklasse festgelegt bzw. spezifiziert.

Die Objektklassen werden im Hinblick auf für die Anwendung wünschenswerte Unterscheidungen von Typen von Gegenständen und/oder im Hinblick auf die auf der Basis der verfügbaren Daten gegebene Unterscheidbarkeit vorgegeben.

Die Parameterwerte für die Echopulseigenschaft stellen eine zusätzliche Information über ein Objekt dar und ermöglichen so die Verwendung von entsprechenden Kriterien zur Vorgabe bzw. Festlegung von Objektklassen zu Objekten. Erfindungsgemäß bezieht sich dazu wenigstens ein Zuordnungskriterium für wenigstens eine Objektklasse, das zur Zuordnung der Objektklasse zu einem Objekt herangezogen wird, auf wenigstens einen der dem Objekt mittels der dem Objekt zugeordneten Abstandsbildpunkte zugeordneten Parameterwerte.

Es werden mehrere entsprechende Objektklassen vorgegeben, die sich wenigstens in dem Zuordnungskriterium in Bezug auf den wenigstens einen Parameterwert für die Echopulseigenschaft unterscheiden.

Insgesamt kann daher durch die Verwendung der Echopulseigenschaft zum einen eine Einordnung in eine größere Anzahl von spezifischeren Objektklassen erfolgen. Zum anderen kann eine Zuordnung auch mit größerer Sicherheit erfolgen.

Ein wesentlicher Vorteil des erfindungsgemäßen Verfahrens liegt darin, dass zur Klassifikation nur ein Abstandsbild notwendig ist, so dass die Klassifikation schnell durchführbar ist.

Insbesondere bei der Verfolgung von Objekten, die Gegenständen mit für von dem Sensor verwendete Strahlung gut reflektierenden Flächen entsprechen, können sich so deutliche Verbesserungen in der Klassifikation ergeben. Dies gilt insbesondere für Straßenfahrzeuge mit Reflektoren, beispielsweise Rückstrahlern, insbesondere in Heckleuchten, oder das Kraftfahrzeugkennzeichen. Diese Reflektoren weisen in der Regel im Vergleich zu anderen Oberflächenbereichen auf einem Fahrzeug wesentlich größere Reflektivitäten auf und können insbesondere als Retroreflektoren ausgebildet sein.

Aber auch andere Gegenstände im Bereich der Straße tragen Reflektoren, beispielsweise Leitpfosten zur Begrenzung von Fahrbahnen, oder sind in wenigstens einer Ansicht insgesamt als Reflektoren ausgebildet, wie dies beispielsweise häufig bei Verkehrsschildern der Fall ist.

Da viele dieser Reflektoren eine extrem hohe Reflektivität aufweisen, können diese auch bei nur kleinen Flächen im Vergleich zur Querschnittsfläche des gepulsten Strahlungsbündels Echopulse mit Energien zurückwerfen, deren von einem Empfangselement des Sensors empfangene Energien wesentlich größer sind als die von Echopulsen, die von anderen Bereichen auf Gegenständen zurückgeworfen wurden. Diese Eigenschaft äußert sich dann in entsprechenden Werten des Parameters für die Echopulseigenschaft, die sich ebenfalls von denen für die anderen Bereiche auf den Gegenständen unterscheiden.

Diese Reflektoren können daher besonders gut zur Klassifizierung der entsprechenden Gegenstände verwendet werden.

Weiterbildungen und bevorzugte Ausführungsformen der Erfindung sind in den Ansprüchen, der Beschreibung und den Zeichnungen beschrieben.

Für das erfindungsgemäße Verfahren ist es besonders vorteilhaft, wenn die von dem Sensor erfasste Energie der empfangenen Echopulse tatsächlich die Eigenschaften des Punktes bzw. Bereichs auf einem Gegenstand wiedergibt, von dem der Echopuls zurückgeworfen wurde. In sehr vielen Fällen wird ein Empfangselement des Sensors, das den Echopuls erfasst, sich nicht über die gesamte Querschnittsfläche des Echopulses bzw. des entsprechenden Strahlenbündels erstrecken, so dass es nicht die Gesamtenergie des Echopulses empfängt. Vielmehr wird es dann nur das Produkt aus der Echopulsintensität und der Fläche des Empfangselements empfangen, das jedoch in guter Näherung proportional zu der Echopulsgesamtenergie ist. Die Intensität des Echopulses ändert sich jedoch bei einem nicht perfekt parallelen Echopulsstrahlungsbündel mit der Entfernung. Es ist daher bevorzugt, dass die den Abstandsbildpunkten zugeordneten Parameterwerte für die Echopulseigenschaft in Bezug auf den durch den jeweiligen Abstandsbildpunkt gegebenen Abstand von dem Sensor korrigiert werden. Insbesondere können hierzu die Parameterwerte mit dem Quadrat der Abstandswerte in den Abstandsbildpunkten, denen die Parameterwerte jeweils zugeordnet sind, multipliziert werden. Die sich auf diese Weise ergebenden Parameterwerte geben in guter Näherung die Gesamtenergie der Echopulse wieder. Auf diese Weise ergeben sich auch für Abstandsbildpunkte in stark unterschiedlichen Entfernungen miteinander vergleichbare Parameterwerte, was die Verwendung dieser Parameterwerte bei der Klassifizierung wesentlich vereinfacht.

Grundsätzlich können als Echopulseigenschaft beliebige Eigenschaften des Echopulses verwendet werden, die von der Energie des Echopulses abhängen. Bei einer Ausführungsform des erfindungsgemäßen Verfahrens ist es bevorzugt, dass als Echopulseigenschaft eine Breite des jeweiligen Echopulses oder eines entsprechenden Signalpulses eines den Echopuls empfangenden Empfangselements bei einem vorgegebenen Pegel verwendet wird. Unter der Breite des Echopulses wird dabei der Abstand von zwei Zeitpunkten verstanden, zu denen die Intensität des Echopulses bzw. die mit der Fläche des jeweiligen Empfangselements des Sensors multiplizierte Intensität des Echopulses bzw. ein entsprechendes Signal des Empfangselements einen vorgegebenen Pegel zuerst überschreitet bzw. wieder unterschreitet. Da der Pegel absolut vorgegeben ist und die Flanken von Echopulsen eine nur endliche Steigung aufweisen, hängt die Breite des Echopulses bei vorgegebenen, von dem Sensor abgegebenen Pulsen unmittelbar mit der Energie des Echopulses zusammen. Der vorgegebene Pegel ist dabei vorzugsweise möglichst klein, aber doch so groß gewählt, dass Rauschen unterdrückt und nicht als Echopuls erkannt wird. Die Verwendung dieser Echopulseigenschaft ist besonders vorteilhaft, da zumindest bei der Verwendung von Laserscannern häufig das Überschreiten und/oder Unterschreiten des vorgegebenen Pegels zur Messung der Laufzeit eines Pulses verwendet wird und damit die Ermittlung der Echopulsbreite apparativ sehr einfach erfolgen kann.

Alternativ oder zusätzlich ist es bevorzugt, dass als Echopulseigenschaft eine Pulsfläche des jeweiligen Echopulses verwendet wird. Dabei wird bei Echopulsen, deren Strahlquerschnitt größer als die Fläche eines Empfangselements des Sensors ist, unter der Pulsfläche des jeweiligen Echopulses insbesondere die über die Dauer des Pulses integrierte Echopulsintensität multipliziert mit einer Fläche des Empfangselements bzw. das entsprechend integrierte Signal des Empfangselements verstanden. Auch diese Echopulseigenschaft ist besonders einfach apparativ durch entsprechende Integrationsschaltungen erhältlich.

Als weitere Alternative ist es bevorzugt, dass als Echopulseigenschaft eine Pulshöhe des jeweiligen Echopulses verwendet wird. Die Pulshöhe entspricht bei Echopulsen, deren Strahlquerschnitt größer als die Fläche eines Empfangselements des Sensors ist, der maximalen Intensität des Echopulses multipliziert mit der Fläche des Empfangselements bzw. dem Maximum des Betrags des Pegels des entsprechenden Signals des Empfangselements. Auch diese Echopulseigenschaft kann durch einfache apparative Vorkehrungen in dem Sensor leicht erfasst werden.

Als weitere Alternative kann auch die Steilheit der Pulsflanken als Echopulseigenschaft verwendet werden, da davon auszugehen ist, dass diese bei konstanter Form in guter Näherung die Echopulsenergie wiedergeben.

Es ist auch denkbar, Kombinationen der Eigenschaften zu verwenden.

Die den Abstandsbildpunkten jeweils zugeordneten Parameterwerte der Echopulseigenschaft können auf verschiedene Art und Weise bei der Klassifizierung verwendet werden.

So ist es bevorzugt, dass wenigstens eine Objektklasse für Objekte vorgegeben wird, die ein entsprechendes vorgegebenes Zuordnungskriterium in Bezug auf die Größe des Parameters für die wenigstens eine Echopulseigenschaft erfüllen, und dass zur Zuordnung einer Objektklasse zu dem Objekt geprüft wird, ob dieses das Zuordnungskriterium erfüllt. Dabei kann als Zuordnungskriterium beispielsweise vorgesehen sein, dass wenigstens einer der einem Objekt über die diesem zugeordneten Abstandsbildpunkte zugeordneten Parameterwerte oder im Wesentlichen alle diese Parameterwerte eine Größe annimmt bzw. annehmen, die einer Echopulsenergie entspricht, die eine vorgegebene Mindestechopulsenergie überschreitet oder innerhalb eines vorgegebenen Intervalls liegt. Dieses Zuordnungskriterium kann dann bedeuten, dass wenigstens einer dieser Parameterwerte einen der Mindestechopulsenergie entsprechenden vorgegebenen Schwellwert, je nach Definition der Parameterwerte, über- bzw. unterschreitet bzw. innerhalb eines entsprechenden Intervalls liegt. Dabei können die Parameterwerte, wie zuvor beschrieben, vorzugsweise korrigiert sein. Insbesondere bei Verwendung der Echopulsbreite, der Echopulsfläche oder auch der Echopulshöhe als Echopulseigenschaft kann als Zuordnungskriterium verwendet werden, dass dem Objekt wenigstens ein Abstandsbildpunkt zugeordnet ist, dessen zugeordneter Parameterwert einen vorgegebenen, einer vorgegebenen Mindestechopulsenergie entsprechenden Schwellwert überschreitet. Die Mindestechopulsenergie bzw. der entsprechende Schwellwert wird dabei vorzugsweise so gewählt, dass dem Kriterium nur Objekte genügen, die Gegenständen entsprechen, die erfassten Gegenstandsbereichen mit Reflektoren für die von dem Sensor verwendete elektromagnetische Strahlung oder auch mit bestimmte Typen von Reflektoren in den zu erwartenden Anwendungssituationen entsprechen. Dieses sehr einfache Zuordnungskriterium erlaubt eine besonders einfache Auswertung und eignet sich insbesondere auch für Typen von Gegenständen bzw. Objektklassen, deren erfassbare Oberfläche im Wesentlichen als Reflektoren ausgebildet sind, beispielsweise Verkehrsschilder, oder deren Ausdehnung so klein ist, dass sie in der Regel nur durch einen Abstandsbildpunkt wiedergeben werden, beispielsweise Leitpfosten zur Begrenzung einer Fahrbahn.

Alternativ oder kumulativ ist es bevorzugt, dass wenigstens eine Objektklasse für Objekte vorgesehen ist, denen wenigstens ein durch eine vorgegebene Variation der Parameterwerte für die Echopulseigenschaft gegebenes Merkmal zugeordnet werden kann, und dass zur Zuordnung einer Objektklasse zu einem Objekt das Zuordnungskriterium geprüft wird, ob das Objekt das Merkmal aufweist. Ein Merkmal ist also durch eine Variation der Parameterwerte für die Echopulsenergie entlang wenigstens eines Abschnitts einer Kontur eines Objekts gegeben. Dem Merkmal kann vorzugsweise eine Lage, insbesondere relative zu dem Objekt bzw. dessen Kontur, zugeordnet werden, die durch die Lagen der entsprechenden Abstandsbildpunkte oder einen aus diesen ermittelbaren Bezugspunkt gegeben sein kann. Diese Ausführungsform eignet sich insbesondere zur Vorgabe von Objektklassen für Typen von Gegenständen, deren von dem Sensor erfassbare Oberflächen abgegrenzte, vorzugsweise an charakteristischen Positionen der Kontur angeordnete, stark reflektierende Bereiche, insbesondere Bereich mit Reflektoren aufweisen. Unter einer Variation wird dabei für einen einfachen Fall insbesondere auch verstanden, dass sich Parameterwerte für die Echopulseigenschaft auf einem Konturabschnitt um mehr als einen vorgegebenen Differenzschwellwert von denen angrenzender Konturabschnitte unterscheiden. Der Differenzschwellwert kann dabei wie der in dem vorhergehenden Absatz genannte Schwellwert gewählt sein. Bei Verwendung eines Parameters für die Echopulseigenschaft, der monoton mit der Echopulsenergie wächst, kann das Merkmal beispielsweise in einem Peak und vorzugsweise dessen Lage in der Kontur des Objekts bestehen. Bei dem Zuordnungskriterium wird dann geprüft, ob ein Peak vorhanden ist, und, vorzugsweise, ob der Peak in einer in Bezug auf die Kontur vorgegebenen Lage liegt. Ein Beispiel hierfür ist ein Kraftfahrzeugkennzeichen an einem Automobil.

Um Gegenstände noch feiner anhand der Variation unterscheiden zu können, ist es besonders bevorzugt, dass das Merkmal durch einen Referenzverlauf des Parameters für die Echopulseigenschaft entlang wenigstens eines Abschnitts einer Kontur des Objekts gegeben ist. Insbesondere bei Objekten, die Gegenständen mit einem näherungsweise rechteckigen Umriss in einer Ebene parallel zu der Standfläche der Gegenstände entsprechen, kann der Konturabschnitt durch eine der Seiten der dann geradlinigen oder aus zueinander gewinkelten Geradenstücken bzw. Strecken bestehenden Kontur gegeben sein. So zeichnen sich beispielsweise zweispurige Kraftfahrzeuge, das heißt zum Beispiel Personenkraftwagen oder Lastkraftwagen sowie Busse, dadurch aus, dass zwischen zwei Heckleuchten mit Rückstrahlern ein ebenfalls stark reflektierendes Kraftfahrzeugkennzeichen angeordnet ist. Beispielsweise bei Verwendung von Parametern für die Echopulseigenschaft, die monoton von der empfangenen Echopulsenergie abhängen, kann sich dann ein Parameterverlauf ergeben, bei dem über einen Konturabschnitt, der dem Heck des Kraftfahrzeugs entspricht, zunächst hohe Werte des Parameters für den Rückstrahler der einen Heckleuchte ermittelt werden, die entlang der Heckkontur dann zunächst auf nicht stark reflektierenden Oberflächen entsprechende, normale Werte abfallen, um dann im Bereich des Kraftfahrzeugkennzeichens wieder ansteigen, danach wieder auf normale Werte abzufallen und schließlich wieder im Bereich des Rückstrahlers der anderen Heckleuchte anzusteigen. So definierte Merkmale sind sehr charakteristisch für bestimmte Typen von Gegenständen, so dass anhand dieser Merkmale ansonsten in den Abstandsbildern gleich aussehende Objekte einfach und sehr differenziert in entsprechende Objektklassen eingeteilt werden können. Zur Vorgabe des Referenzverlaufs können Mittelwerte über tatsächlich erfasste Verläufe von tatsächlich vorhandenen Gegenständen eines Typs, d.h. einer Objektklasse, verwendet werden. Es ist jedoch auch möglich, Vorgaben von Vorschriften wie beispielsweise der Straßenverkehrszulassungsordnung zu verwenden.

Der Referenzverlauf kann nur durch die Abfolge von Maxima und Minima der Parameterwerte gegeben sein, wobei ein Maximum vorzugsweise nur als Maximum verwendet wird, wenn es einen Schwellwert überschreitet, der in Abhängigkeit von dem zu erwartenden Rauschen des Verlaufs zur Unterdrückung desselben gewählt sein kann. Vorzugsweise ist der Referenzverlauf jedoch wenigstens näherungsweise quantitativ in Bezug auf den Konturabschnitt vorgegeben.

Der Verlauf für einen Parameter für die Echopulseigenschaft, der monoton von der Echopulsenergie abhängt, kann insbesondere mehrere Peaks vorgegebener Mindesthöhe aufweisen und als Ganzer als ein Referenzverlauf für ein einzelnes Merkmal behandelt werden. Um eine besonders feine Differenzierung zwischen verschiedenen Typen von Gegenständen zu ermöglichen, ist es bevorzugt, dass eine Objektklasse für Objekte vorgegeben ist, die mehrere vorgegebene Merkmale in einer vorgegebenen Relativlage zueinander aufweisen, und dass zur Zuordnung einer Objektklasse zu einem Objekt das Zuordnungskriterium geprüft wird, ob das Objekt die Merkmale aufweist. Insbesondere kann bei dem Zuordnungskriterium neben dem Vorhandensein der Merkmale auch deren Lage zueinander und/oder relativ zu einer Objektkontur gegeben sein.

Der Referenzverlauf kann auf unterschiedliche Weise vorgegeben werden. So ist es bei einer Ausführungsform des erfindungsgemäßen Verfahrens bevorzugt, dass der Referenzverlauf durch eine Funktion gegeben ist, die von einer sich entlang des Konturabschnitts monoton ändernden Variablen abhängt. Die Vorgabe des Referenzverlaufs als Funktion ermöglicht einen einfachen Vergleich mit einem erfassten Verlauf von Parameterwerten für die Echopulseigenschaft, da hierzu nur die den entsprechenden Konturabschnitt bildenden Abstandsbildpunkte in Werte der Variablen umgerechnet und die Werte der Funktion für diese Variablenwerte ermittelt zu werden brauchen. Die Anzahl der dem Objekt in dem erfassten Abstandsbild zugeordneten Abstandsbildpunkte spielt daher keine Rolle.

Um die gegebenenfalls rechenzeitintensive Auswertung einer Funktion vermeiden zu können, ist es alternativ bevorzugt, dass der Referenzverlauf durch wenigstens ein Feld vorgegebener Länge mit Parameterwerten für die Echopulseigenschaft gegeben ist, wobei jeweils ein Feldelement einer entsprechenden Position auf dem Konturabschnitt entspricht. Vorzugsweise werden für denselben Referenzverlauf mehrere Felder vorgegeben, die jeweils unterschiedliche Länge aufweisen bzw. unterschiedliche Anzahlen von Parameterwerten umfassen. Zum Vergleich mit einem in einem erfassten Abstandsbild aufgefundenen Verlauf kann dann dasjenige Feld verwendet werden, dessen Länge am besten der Anzahl der Abstandsbildpunkte in dem erfassten Konturabschnitt des Objekts entspricht.

Um festzustellen, ob ein Zuordnungskriterium in Bezug auf ein durch einen Referenzverlauf gegebenes Merkmal erfüllt ist, ist es notwendig, in dem Abstandsbild bzw. dem Objekt in dem Abstandsbild nach dem Merkmal zu suchen. Dies kann auf unterschiedlich Art und Weise geschehen.

So ist es gemäß einer Alternative bevorzugt, dass zur Suche nach dem gegebenen Merkmal eine mittlere Abweichung zwischen dem Referenzverlauf des Parameters für die Echopulseigenschaft und einem durch gewählte, dem Objekt zugeordnete Abstandsbildpunkte und diesen zugeordnete Parameterwerte für die Echopulseigenschaft gegebenen aktuellen Verlauf des Parameters der Echopulseigenschaft verwendet wird. Dabei kann der Referenzverlauf gegebenenfalls relativ zu dem durch die gewählten aktuellen Abstandsbildpunkte gegebenen Verlauf um eine vorgegebene Distanz verschoben sein. Ist die relative Lage des Konturabschnitts für den Referenzverlauf und des potentiellen durch die gewählten aktuellen Abstandsbildpunkte bestimmten Konturabschnitts für den aktuellen Verlauf nämlich nicht genau bekannt, kann durch Variation der Distanz der Referenzverlauf vorzugsweise so verschoben werden, dass die resultierende mittlere Abweichung minimiert wird. Die Größe der Abweichung ist dabei ein Maß für die Übereinstimmung des Referenzverlaufs mit dem erfassten Verlauf. Bei den ausgewählten Abstandsbildpunkten kann es sich insbesondere um alle Abstandsbildpunkte handeln, die dem entsprechenden Objekt zugeordnet sind. Es ist jedoch bevorzugt, dass in der erfassten Kontur des Objekts nach einem Konturabschnitt gesucht wird, der dem zur Definition des Referenzverlaufs verwendeten Konturabschnitt in geometrischer Hinsicht ähnelt und vorzugsweise aufgrund seiner Lage in der Kontur diesem entsprechen sollte, und die entsprechenden Abstandsbildpunkte auszuwählen. Als Abweichungen können beispielsweise Beträge von Differenzen oder quadratischen Abweichungen verwendet werden.

Um eine größere Aussagekraft zu erhalten, ist es bevorzugt, dass zur Suche nach dem gegebenen Merkmal eine Kreuzkorrelation zwischen dem Referenzverlauf des Parameters für die Echopulseigenschaft und einem durch gewählte, dem Objekt zugeordnete Abstandsbildpunkte und diesen zugeordnete Parameterwerte für die Echopulseigenschaft gegebenen aktuellen Verlauf des Parameters der Echopulseigenschaft verwendet wird. Ist die Lage des Konturabschnitts für den Referenzverlauf und des durch die ausgewählten aktuellen Abstandsbildpunkte definierten Konturabschnitts für den aktuellen Verlauf nicht genau bekannt, kann dabei insbesondere die Kreuzkorrelation als Funktion einer Verschiebung zwischen dem Referenzverlauf und dem aktuellen Verlauf ermittelt werden, wobei die Funktionswerte gegebenenfalls nur für wenige Verschiebungswerte ermittelt zu werden brauchen. Maxima der Funktion können dann auf eine Übereinstimmung der Verläufe hindeuten. Die Abstandsbildpunkte können insbesondere so ausgewählt werden, wie dies in Bezug auf die Verwendung der mittleren Abweichung beschrieben ist. Hierdurch können insbesondere auch auf einfache Weise nur teilweise in den Abstandsbildern sichtbare Anteile von Merkmalen wieder aufgefunden werden, wobei die Größe der entsprechenden Kreuzkorrelation als ein Maß für die Güte der Übereinstimmung verwendet werden kann.

Prinzipiell ist es möglich, dass Objekte, die ein gegebenes Zuordnungskriterium in Bezug auf die Parameterwerte für die Echopulseigenschaft erfüllen, verschiedenen Typen von Gegenständen entsprechen und daher in verschiedene Objektklassen eingeordnet werden sollten. Es ist daher bevorzugt, dass wenigstens eine Objektklasse für Objekte vorgesehen ist, die wenigstens ein weiteres Zuordnungskriterium in Bezug auf die Kontur des Objekts erfüllen.

Eine wesentliche Eigenschaft von Objekten, die aus einem Abstandsbild ermittelbar ist und zur Klassifizierung von Objekten verwendet werden kann, ist deren Ausdehnung in dem Abstandsbild. Es ist daher bevorzugt, dass das weitere Zuordnungskriterium sich auf eine durch die erfasste Kontur des Objekts gegebene Ausdehnung des Objekts bezieht. Die Ausdehnung kann dabei beispielsweise durch einen maximalen Durchmesser oder eine Länge wenigstens einer Seite, vorzugsweise der längsten Seite, eines kleinsten Rechtecks gegeben sein, das die erfasste Kontur umschließt. Beispielweise können nach diesem Kriterium Verkehrsschilder und Leitpfosten unterschieden werden, die beide hohe Reflektivitäten und daher beispielsweise große Echopulsbreitenwerte aufweisen. Weiterhin können so beispielsweise Personenkraftwagen von Bussen unterschieden werden, obwohl sich diese in dem Verlauf der Echopulsbreite entlang einer Heckpartie nicht wesentlich zu unterscheiden brauchen.

Weiterhin ist es alternativ oder zusätzlich bevorzugt, dass das weitere Zuordnungskriterium sich auf die Form wenigstens eines Abschnitts der Kontur bezieht. So weisen beispielsweise zweispurige Kraftfahrzeuge in der Regel in einer Ebene parallel zu deren Standfläche einen näherungsweise rechteckigen Umriß auf, der sehr charakteristisch für diese ist.

Darüber hinaus ist es alternativ oder zusätzlich bevorzugt, dass das weitere Zuordnungskriterium sich auf die Verteilung der die Kontur in dem Abstandsbild bildenden Abstandsbildpunkte bezieht. So können beispielsweise Lastkraftwagen einen in einer Ebene parallel zu deren Standfläche einen Umriß mit einer großen Streuung der Abstandsbildpunkte um eine einer der Seiten des Lastkraftwagens entsprechende Gerade aufweisen, während dies für Busse nicht der Fall ist.

Weiterhin ist es bevorzugt, dass das weitere Zuordnungskriterium sich auf die Lage des Objekts in Bezug auf andere Objekte oder die absolute Lage des Objekts bezieht. Die absolute Lage kann dabei beispielsweise durch eine digitale Karte in Verbindung mit einem beispielsweise satellitengestützten Positionsbestimmungssystem wie GPS ermittelt werden. Dabei kann beispielsweise ausgenutzt werden, dass manche Gegenstände nur neben, nicht aber auf einer Fahrbahn vorkommen können.

Das erfindungsgemäße Verfahren braucht grundsätzlich nur zur Klassifizierung verwendet zu werden. Es ist jedoch bevorzugt, dass es bei einem Verfahren zur Objektverfolgung verwendet wird, bei dem Objekte auf der Basis einer zeitlichen Folge von Abstandsbildern verfolgt werden. Die bei dem erfindungsgemäßen Verfahren verwendeten Abstandsbilder werden von dem Sensor in zeitlicher, vorzugsweise zeitlich äquidistanter Folge erfasst, wobei die Abstandsbildpunkte innerhalb eines einzelnen Abstandsbildes nicht unbedingt nacheinander erfasst zu werden brauchen. Die Schritte der Objektverfolgung werden dann zyklisch durchgeführt, wobei vorzugsweise für jeden Zyklus ein neues, aktuelles Abstandsbild des Sensors in eine zur Durchführung des Verfahrens geeignete Einrichtung eingelesen bzw. zur Durchführung des Verfahrens bereitgestellt wird. Ergebnisse der Klassifizierung können vorzugsweise bei der Objektverfolgung verwendet werden, wie dies beispielsweise in der am 28. September 2001 eingereichten deutschen Patentanmeldung mit dem amtlichen Aktenzeichen 101 48 071.7 beschrieben ist.

Bei der Objektverfolgung werden auch dynamische Eigenschaften von Objekten, beispielsweise deren Geschwindigkeiten ermittelt. Es ist daher bevorzugt, dass zur Zuordnung einer Objektklasse zu einem Objekt auch bei der Objektverfolgung ermittelte Eigenschaften des Objekts verwendet werden. Diese Eigenschaften können insbesondere auch bei einer Neuklassifizierung während einer Objektverfolgung verwendet werden.

Bei dem erfindungsgemäßen Verfahren braucht dem Objekt nur eine einzige Objektklasse zugeordnet zu werden. Insbesondere wenn nur ein Abstandsbild zur Klassifizierung verwendet wird, kann jedoch der Fall auftreten, dass auf der Basis der vorhandenen Information einem Objekt mehrere Objektklassen zugeordnet werden können. Im Verlauf einer Objektverfolgung können dann gegebenenfalls durch die Objektverfolgung bereitgestellte Daten in Bezug auf das Objekt dazu verwendet werden, für wenigstens eine der einem Objekt zugeordneten Objektklassen die Zuordnung aufzuheben. Um zum einen dieses Vorgehen zu erleichtern und zum anderen Anhaltspunkte dafür gewinnen zu können, ob die Zuordnung einer Objektklasse zu einem Objekt zutreffender oder sicherer erscheint als die einer anderen Objektklasse, ist es bevorzugt, dass dem Objekt für eine diesem zugeordnete Objektklasse ein Wert für eine Zuordnungsgüte zugeordnet wird. Die Zuordnungsgüte gibt dabei wieder, wie eindeutig und/oder zutreffend und/oder sicher bzw. wie "gut" die Zuordnung der entsprechenden Objektklasse zu dem Objekt im Vergleich zu einer Zuordnung einer anderen Objektklasse ist. Der Wert der Zuordnungsgüte für eine Objektklasse kann insbesondere davon abhängen, wie viele Objektklassen dem Objekt zugeordnet werden könnten und/oder wie viele Zuordnungskriterien für die Zuordnung zu der gegebenen Objektklasse erfüllt sind. Vorzugsweise sind die Werte der Zuordnungsgüten für ein Objekt bezüglich eines Referenzwertes festgelegt. Beispielsweise können sie so normiert sein, dass die Summe der Werte der Zuordnungsgüten, die einem Objekt zugeordnet sind, den Wert 1 ergeben.

Wird eine Objektverfolgung durchgeführt, werden besonders bevorzugt die Zuordnungsgüten laufend aktualisiert. Dabei kann vorzugsweise eine Zuordnung aufgehoben werden, wenn der entsprechende Wert der Zuordnungsgüte einen vorgegebenen Minimalwert unterschreitet.

Es ist jedoch besonders bevorzugt, dass dem Objekt jede bei dem Verfahren verwendete Objektklasse und jeweils ein entsprechender Wert für die Zuordnungsgüte zugeordnet werden. Mit anderen Worten werden für das Objekt für alle bei dem Verfahren vorgesehenen Objektklassen Zuordnungsgüten ermittelt und dem Objekt zusammen mit den jeweiligen Objektklassen zugeordnet. Die Zuordnung der Objektklassen kann dann insbesondere nur noch in der Angabe der entsprechenden Zuordnungsgüten bestehen. Werden diese Zuordnungen für jedes Objekt durchgeführt, was bevorzugt ist, ist es insbesondere möglich abzufragen, mit welcher Güte allen Objekten eine beliebig vorgegebene Objektklasse zugeordnet wird.

Bei einer laufenden Aktualisierung der Zuordnungsgüten ist es dann besonders bevorzugt, dass für das Objekt die in wenigstens zwei Zyklen ermittelten Zuordnungsgüten für jeweils eine Objektklasse gemittelt werden. Dabei kann insbesondere ein gewichteter Mittelwert gebildet werden. Diese Mittelwerte der Zuordnungsgüten für jeweils eine Objektklasse und ein Objekt in mehreren Zyklen ändern sich überraschend wenig, so dass, auch bei kurzzeitiger teilweiser Verdeckung eines Objekts und der sonst damit einhergehenden Gefahr einer falschen Neuklassifizierung nach mehreren Zyklen, eine stabile und robuste Klassifizierung erreicht wird.

Weiterer Gegenstand der Erfindung ist ein Computerprogramm mit Programmcode-Mitteln, um das erfindungsgemäße Verfahren durchzuführen, wenn das Programm auf einem Computer ausgeführt wird. Unter einem Computer wird dabei insbesondere auch jede Datenverarbeitungseinrichtung verstanden, die insbesondere einen Prozessor, einen Speicher und Schnittstellen zur Zuführung bzw. zur Abgabe von Daten aufweist. Insbesondere kann der Computer einen digitalen Signalprozessor aufweisen.

Weiterhin ist Gegenstand der vorliegenden Erfindung ein Computerprogrammprodukt mit Programmcode-Mitteln, die auf einem computerlesbaren Datenträger gespeichert sind, um das erfindungsgemäße Verfahren durchzuführen, wenn das Computerprogrammprodukt auf einem Computer ausgeführt wird. Bei dem Datenträger kann es sich insbesondere um nichtflüchtige Speicher in Form von entsprechenden Halbleiterbauelementen, CDs, DVDs oder auch Disketten handeln.

Darüber hinaus ist Gegenstand der vorliegenden Erfindung eine Vorrichtung zur Klassifizierung von Objekten mit mindestens einem optoelektronischen Sensor, vorzugsweise einem Laserscanner, mittels dessen Abstandsbilder eines Erfassungsbereichs mit Abstandsbildpunkten erfassbar sind, die jeweils durch Aussendung eines Pulses elektromagnetischer Strahlung und Detektion des von einem Punkt oder Bereich auf einem Gegenstand als Echopuls Pulses sowie Erfassung wenigstens einer von der Energie des Echopulses abhängigen Echopulseigenschaft des Echopulses erhältlich sind, und mit einer mit dem optoelektronischen Sensor verbundenen Datenverarbeitungseinrichtung, die zur Durchführung des erfindungsgemäßen Verfahrens ausgebildet ist. Die Datenverarbeitungseinrichtung kann insbesondere mit einem erfindungsgemäßen Computerprogramm programmiert sein.

Die Erfindung wird nun noch weiter beispielhaft anhand der Zeichnungen erläutert. Es zeigen:

Fig. 1    eine schematische Draufsicht auf eine Szene mit einem Fahrzeug, an dem ein Laserscanner angebracht ist, sowie verschiedenen Gegenständen im Erfassungsbereich des Laserscanners,

Fig. 2    eine schematische Darstellung eines zeitlichen Verlaufs eines Echopulses,

Fig. 3    ein schematisches Ablaufdiagramm eines Verfahrens zur Klassifizierung und Verfolgung von Objekten nach einer bevorzugten Ausführungsform der Erfindung,

Fig. 4    drei Ausschnitte aus nacheinander erfassten Abstandsbildern, in denen ein Heck eines Fahrzeugs durch einen sich an dem Heck vorbei bewegenden Fußgänger teilweise verdeckt ist, und

Fig. 5    Diagramme von Echopulsbreitenverläufen entsprechend fünf verschiedenen Abstandsbildern der Situation in Fig. 5.

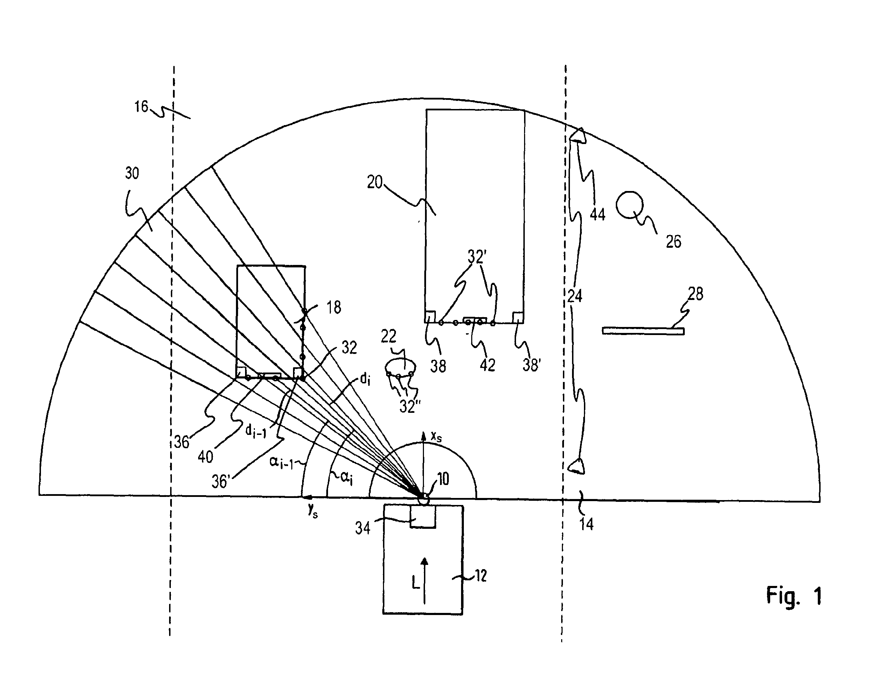

In Fig. 1 ist ein Laserscanner 10 an der Frontseite eines Fahrzeugs 12 montiert, um Gegenstände vor dem Fahrzeug 12 zu erfassen. Der Laserscanner 10 weist einen in Fig. 1 nur schematisch gezeigten Erfassungsbereich 14 auf, der aufgrund der Lage des Laserscanners 10 symmetrisch zur Längsachse L des Fahrzeugs 12 einen Winkel von etwa 180° abdeckt. Der Erfassungsbereich 14 ist in Fig. 1 nur schematisch und zur besseren Darstellung insbesondere in radialer Richtung zu klein dargestellt. In dem Erfassungsbereich 14 befinden sich beispielhaft auf einer Fahrbahn 16 drei Gegenstände 18, 20 und 22, nämlich ein Personenkraftwagen 18, ein Lastkraftwagen 20 und ein sich quer zu einer Längsrichtung L des Fahrzeugs 12 bewegender Fußgänger 22. Neben der Fahrbahn befinden sich zwei Leitpfosten 24, ein Pfahl 26 und ein Verkehrsschild 28.

Der Laserscanner 10 tastet seinen Erfassungsbereich 14 in einer Abtastebene in grundsätzlich bekannter Weise mit einem mit konstanter Winkelgeschwindigkeit geschwenkten, gepulsten Laserstrahlungsbündel 30 ab, wobei ebenfalls umlaufend in konstanten Zeitabständen $T$ zu Zeiten $\tau_i$ in festen Winkelbereichen um einen mittleren Winkel $\alpha_i$ detektiert wird, ob das Laserstrahlungsbündel 30 von einem Punkt bzw. Bereich eines Gegenstands zurückgeworfen wird. Der Index $i$ läuft dabei von 1 bis zur Anzahl der Winkelbereiche im Erfassungsbereich. Von diesen Winkelbereichen sind in Fig. 1 nur einzelne gezeigt, unter anderem die den mittleren Winkeln $\alpha_{i-1}$ und $\alpha_i$ zugeordneten Winkelbereiche. Hierbei sind die Winkelbereiche zur deutlicheren Darstellung wiederum übertrieben groß gezeigt.

Zur Messung des Abstands eines Punkts bzw. Bereichs 32 auf einem Gegenstand wie dem Gegenstand 18 von dem Laserscanner 10 wird bei einem gegebenen Winkel jeweils ein Laserstrahlpuls vorgegebener bekannter Pulsform und Höhe abgestrahlt, der dann als Echopuls von diesem Punkt bzw. Bereich 32 wenigstens teilweise zurückgeworfen und von dem Laserscanner 10 empfangen wird. Anhand der Laufzeit des Laserstrahlpulses von dem Laserscanner 10 zu dem Punkt oder Bereich 32 und zurück zu dem Laserscanner 10 wird der Sensorabstand $d_i$ des erfassten Gegenstandspunktes 32 von dem Laserscanner 10 ermittelt.

Der Laserscanner 10 erfasst daher in seinem xs-ys-Koordinatensystem als Koordinaten in einem Rohdatenelement für einen Gegenstandspunkt 24 auf der Oberfläche des Gegenstands 18 den Winkel $\alpha_i$ und den bei diesem Winkel festgestellten Abstand $d_i$, das heißt die Position des Gegenstandspunktes 32 in Polarkoordinaten relativ zu dem Laserscanner 10 bzw. dem Fahrzeug 12. Entsprechendes gilt für die Gegenstandspunkte 32' auf dem Fahrzeug 18, die Gegenstandspunkte 32" auf dem Fußgänger 20 und in Fig. 1 nicht gezeigte Gegenstandspunkte auf den Leitpfosten 24, dem Pfahl 26 und dem Verkehrsschild 28. Bei einer Abtastung des Erfassungsbereichs 14 werden von dem Laserscanner 10 somit geordnet nach aufsteigenden Polarwinkeln Rohdatenelemente mit Koordinaten ($\alpha_i$, $d_i$) bereitgestellt, wobei $i$ eine natürliche Zahl zwischen 1 und der Anzahl der von dem Laserscanner 10 erfassten Rohdatenelemente ist. Die Menge der bei einer Abtastung erfassten Rohdatenelemente bzw. daraus, gegebenenfalls nach Korrektur der Daten und/oder Transformation in ein anderes Koordinatensystem erhaltenen Abstands- bzw.

Entfernungsbildpunkte, im Folgenden einfach als Bildpunkte bezeichnet, bildet ein Abstandsbild im Sinne der Erfindung. Die Bildpunkte werden dabei in der Reihenfolge der Erfassung, das heißt zunehmender Polarwinkel abgespeichert.

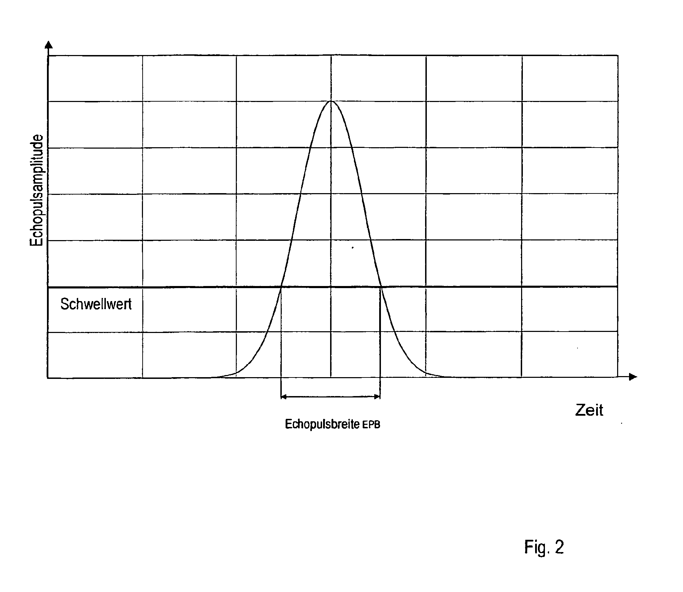

Bei der Erfassung eines Bildpunkts bzw. eines Rohdatenelements wird nicht nur die Laufzeit des Laserstrahlpulses ermittelt, sondern es wird auch eine Echopulsbreite (EPB) des jeweils von dem Gegenstand zurückgeworfenen Echopulses bestimmt. In Fig. 2 ist schematisch der zeitliche Verlauf der Intensität eines Echopulses gezeigt. Ein in den Figuren nicht gezeigtes Empfangselement des Laserscanners 10, mit dem der Echopuls empfangen wird, gibt ein in seiner Form der Form des Echopulses entsprechendes Signal aus, das das Produkt aus der Empfangsfläche des Empfangselements und der empfangenen Intensität des Echopulses wiedergibt. Die Intensität des Echopulses ist dabei proportional zur Energie des Echopulses. Die Echopulsbreite wird nun dadurch ermittelt, dass der Abstand von zwei Zeitpunkten ermittelt wird, zu denen die Intensität des Echopulses bzw. genauer ein Pegels eines entsprechendes Signals einen vorgegebenen Pegel ansteigend bzw. abfallend erreicht (vgl. Fig. 2). Dies wird in dem Laserscanner 10 in der Form realisiert, dass für das entsprechende Signal des Empfangselements des Laserscanners 10 ein entsprechender Signalschwellwert bzw. -pegel gesetzt wird und dass der Abstand von zwei Zeitpunkten ermittelt wird, zu denen das Signal den Signalschwellwert ansteigend bzw. abfallend erreicht. Der vorgegebene Signalschwellwert bzw. Pegel ist so gewählt, dass Rauschen nicht als Echopuls erkannt werden kann. Da die Echopulse keine Rechteckform haben, weist ein Echopuls gleicher Form, aber geringerer Energie bzw. Intensität entsprechend der Verjüngung des Echopulses in Richtung auf sein Maximum zu auch eine geringere Echopulsbreite auf. Die jeweils erfassten Echopulsbreiten werden den Abstandsbildpunkten zugeordnet, bei deren Erfassung sie jeweils ermittelt wurden.

Der Laserscanner 10 tastet seinen Erfassungsbereich 14 jeweils in aufeinander folgenden Abtastungen mit gleichem Zeitabstand T ab, so dass eine zeitliche Folge von Abtastungen und damit Abstandsbildern entsteht.

Zur Verarbeitung der Rohdatenelemente bzw. Abstandsbildpunkte weist der Laserscanner 10 eine Auswerteelektronik bzw. Datenverarbeitungseinrichtung 34 auf, die im Beispiel in dem Laserscanner 10 angeordnet ist, grundsätzlich aber auch davon abgesetzt angeordnet sein kann. Die Datenverarbeitungseinrichtung 34 weist unter anderem einen zur Ausführung eines Verfahrens nach einer bevorzugten Ausführungsform der Erfindung mit einem Computerprogramm nach einer bevorzugten Ausführungsform der Erfindung programmierten digitalen Signalprozessor, eine mit dem digitalen Signalprozessor verbundene Speichereinrichtung sowie Schnittstellen zur Ausgabe von Daten an eine in den Figuren nicht gezeigte Fahrzeugsteuerung auf. Der Laserscanner 10 mit der Datenverarbeitungseinrichtung 34 bildet daher eine Vorrichtung zur Objektverfolgung nach einer bevorzugten Ausführungsform der Erfindung.

Der Personenkraftwagen 18 und der Lastkraftwagen 20 weisen jeweils an den Ecken ihrer Heckpartie Heckleuchten mit Reflektoren bzw. Rückstrahlern 36, 36' bzw. 38, 38' sowie Kraftfahrzeugkennzeichen 40 bzw. 42 mit einer für die Laserstrahlung retroreflektierenden Grundfläche auf. Die Kraftfahrzeugkennzeichen 40 bzw. 42 sind dabei jeweils zwischen den Heckleuchten 36 und 36' bzw. 38 und 38' angeordnet.

Die neben der Fahrbahn 16 aufgestellten und diese begrenzenden Leitpfosten 24 verfügen ebenfalls über Reflektoren 46, die als Retroreflektoren ausgebildet sind.

Das Verkehrsschild 28 verfügt über eine für Strahlung des Laserscanners 10 retroreflektierende Oberfläche.

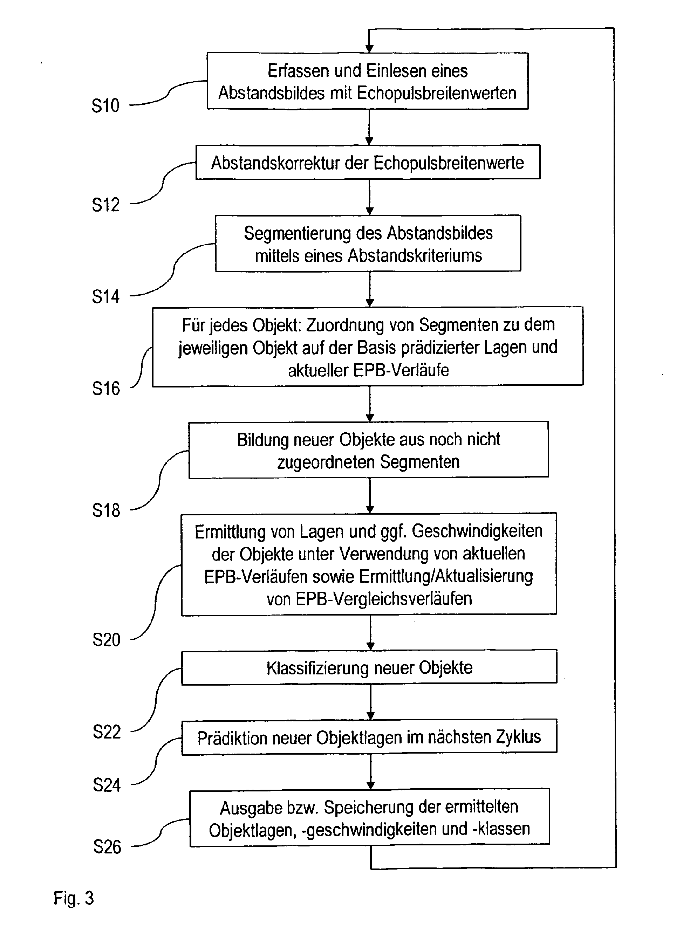

Ein Verfahren zur Klassifizierung und Verfolgung von Objekten nach einer bevorzugten Ausführungsform der Erfindung ist grob schematisch in dem Ablaufdiagramm in Fig. 3 dargestellt.

Bei diesem Verfahren wird als Parameter für eine Echopulseigenschaft, die von der Echopulsenergie abhängt, die zuvor beschriebene Echopulsbreite verwendet.

Jedem Objekt mit einem näherungsweise geradlinigen oder gewinkelten (teilweisen) Umriss in dem Abstandsbild wird ein Vergleichsverlauf der Echopulsbreite entlang eines geradlinigen Konturabschnitts des Objekts zugeordnet, entlang dessen für wenigstens einen Punkt bzw. Bereich Echopulsbreitenwerte auftreten, die eine vorgegebene Mindestechopulsbreite überschreiten und daher einem Reflektor entsprechen können. Dazu wird ein Feld verwendet, in dem, in jedem Zyklus aktualisiert, Echopulsbreitenwerte dem Konturabschnitt entsprechender aufeinander folgender Abstandsbildpunkte in dem Abstandsbild gespeichert sind. Sollten in dem Vektor Abstandsbildpunkte nicht dem Objekt zugeordnet sein, beispielsweise weil sie durch ein anderes Objekt verdeckt sind, so werden entsprechende Feldeinträge mit dem Wert Null belegt, so dass sich weiterhin ein Feld von Echopulsbreiten ergibt, dessen Einträge Bildpunkten entsprechen, die in Polarkoordinaten gleiche, der Winkelauflösung des Laserscanners 10 entsprechende Winkelabstände voneinander aufweisen.

Weiterhin wird jedem Objekt eine Objektklasse zugeordnet, die unter Verwendung wenigstens eines Parameterwertes eines dem Objekt zugeordneten Abstandsbildpunktes ermittelt wird.

Das Verfahren wird in aufeinander folgenden Zyklen durchgeführt, wobei jeder Zyklus mit dem Schritt S 10 beginnt.

Zunächst wird in Schritt S 10 eines aktuellen Zyklus nach der Erfassung eines aktuellen Abstandsbildes einschließlich den Abstandsbildpunkten des Abstandsbildes zugeordneten, aktuellen Echopulsbreitenwerte das Abstandsbild einschließlich der entsprechenden Echopulsbreitenwerte in die Datenverarbeitungseinrichtung 34 eingelesen. Soweit dies noch nicht geschehen ist, können die Koordinaten der Abstandsbildpunkte in das xsys-Sensorkoordinatensystem transformiert werden, wobei gleichzeitig eine Korrektur der Abstandsbildpunkte in Bezug auf eine Eigenbewegung des den Laserscanner 10 tragenden Fahrzeugs 12 erfolgen kann.

In dem folgenden Schritt S 12 werden dann alle Echopulsbreitenwerte in Bezug auf den Abstand der Abstandsbildpunkte von dem Laserscanner 10 korrigiert, denen die Echopulsbreitenwerte jeweils zugeordnet sind. Zu diesem Zweck werden die Echopulsbreitenwerte mit dem Quadrat des durch den jeweiligen Abstandsbildpunkt gegebenen Abstands des erfassten Gegenstandspunktes bzw. -bereichs von dem Laserscanner 10 multipliziert. Auf diese Weise werden korrigierte Echopulsbreitenwerte erhalten, die wenigstens näherungsweise keine durch unterschiedliche Abstände der entsprechenden Gegenstandspunkte bzw. -bereiche von dem Laserscanner 10 verursachten Veränderungen enthalten. Die Echopulsbreitenwerte werden dabei durch die korrigierten Echopulsbreitenwerte ersetzt.

Auf der Basis des so entstandenen Abstandsbildes wird dann, bis auf die im Folgenden genauer geschilderten Änderungen, eine konventionelle Objektverfolgung durchgeführt, wie sie beispielsweise in der in der Reihe Fortschritts-Berichte, Sachgebiet: Verkehrstechnik/ Fahrzeugtechnik, Band Nr. 438 veröffentlichten Dissertation von Kirchner, Alexander mit dem Titel "Sensordatenverarbeitung eines Laserscanners für autonome Fahrfunktionen von Kraftfahrzeugen", Hamburg, 2000, ISBN: 3-18-343812-7, ISSN: 0178-9449 genauer beschrieben ist.

Dabei werden Objekte jeweils durch einen Bezugspunkt, beispielsweise ihren geometrischen Schwerpunkt, bzw. dessen Lage, ihre Länge und Breite sowie die Geschwindigkeit des Bezugspunkts als Zustandsvariablen beschrieben.

In Schritt S 14 wird zunächst das in Schritt S 12 erhaltene Abstandsbild unter Bildung von Segmenten segmentiert.

Vor der eigentlichen Segmentierung werden Abstandsbildpunkte gesucht, die virtuellen Gegenstandspunkten, die auch als "Abrisskanten" bezeichnet werden, entsprechen. Bei der Erfassung der Abstandsbildpunkte kann nämlich die Situation auftreten, dass ein Gegenstandsbereich aus Sicht des Laserscanners 10 teilweise von einem anderen Gegenstandsbereich des gleichen Gegenstands oder eines anderen Gegenstands verdeckt wird. Dann kann der Fall eintreten, dass der von dem Laserscanner 10 ausgesandte Puls teilweise auf den einen Gegenstandsbereich und teilweise auf den anderen Gegenstandsbereich fällt und von beiden teilweise zurückgeworfen wird. Unterschreitet der Abstand zwischen den erfassten Bereichen in radialer Richtung von dem Laserscanner 10 einen Mindestabstand, wird nur ein einzelner Echopuls gebildet, der eine außergewöhnlich große überschreitende Echopulsbreite aufweist. Diesem Mindestabstand, der unter anderem von den Eigenschaften des Laserscanners 10 und den Eigenschaften der von diesem ausgesendeten Laserstrahlpulse, insbesondere deren Dauer, abhängt, entspricht ein Echopulsbreitengrenzwert für die Echopulsbreite. Der entsprechende Abstandsbildpunkt enthält dann eine mit potentiell großen Fehlern behaftete Abstandsinformation. Insbesondere kann der Abstandsbildpunkt einem nur virtuellen Gegenstandspunkt in radialer Richtung von dem Laserscanner 10 irgendwo zwischen den beiden Gegenstandsbereichen entsprechen.

Für jeden der Abstandsbildpunkte wird daher überprüft, ob der ihm zugeordnete korrigierte Echopulsbreitenwert den vorgegebenen, dem Mindestabstand entsprechenden Echopulsbreitengrenzwert überschreitet und ob die in Polarkoordinaten in Bezug auf den Polarwinkel zu diesem Abstandsbildpunkt benachbarten Abstandsbildpunkte Abstände aufweisen, die sich um mehr als einen Abstandsgrenzwert unterscheiden, der in Abhängigkeit von dem Echopulsbreitegrenzwert gewählt sein kann. Ist dies der Fall, liegt der oben beschriebene Fall vor. Der Abstandsbildpunkt wird dann aus dem Abstandsbild gelöscht. Alternativ kann er bei einer anderen Ausführungsform durch zwei Abstandsbildpunkte mit gleichen Polarwinkeln ersetzt werden, die jeweils Abstände aufweisen, die den Abständen der in Bezug auf den Polarwinkel benachbarten Abstandsbildpunkte entsprechen. Bei Verwendung eines anderen Parameters für eine Echopulseigenschaft, insbesondere eines Parameters, der monoton mit der Echopulsenergie zunimmt, kann entsprechend vorgegangen werden.

Zur eigentlichen Segmentierung werden ausgehend von einem ersten Abstandsbildpunkt eines Segments weitere Abstandsbildpunkte in dem Abstandsbild gesucht, die von wenigstens einem bisher dem Segment zugeordneten Abstandsbildpunkt einen Abstand aufweisen, der kleiner ist als ein vorgegebener Segmentierungsabstand. Werden solche Bildpunkte gefunden, werden sie dem Segment zugeordnet und bei der weiteren Segmentierung nicht mehr beachtet. Sonst wird das Segment abgeschlossen und ein neues Segment begonnen. Der Segmentierungsabstand kann in Abhängigkeit von den typischerweise bei der Objektverfolgung auftretenden Gegenständen und dem räumlichen Auflösungsvermögen des Laserscanners 10 gewählt sein. Das in Schritt S 12 erhaltene Abstandsbild wird so vollständig in Segmente zerlegt, die keine gemeinsamen Bildpunkte aufweisen.

In Schritt S 16 erfolgt für jedes in dem aktuellen Zyklus bereits bekannte Objekt eine Zuordnung von Segmenten zu dem jeweiligen Objekt. Zunächst werden hierzu Segmente ermittelt, die zur Zuordnung zu dem jeweiligen Objekt in Betracht kommen. Dazu wird in einem Suchbereich, dessen Größe unter anderem durch die Unsicherheit der Prädiktion gegeben ist, um eine im vorhergehenden Zyklus für den aktuellen Zyklus prädizierte Lage des Bezugspunkts des Objekts nach Segmenten gesucht. Werden Segmente in dem Suchbereich aufgefunden, werden diese dem jeweiligen Objekt zunächst provisorisch zugeordnet. Eine beispielhafte Realisierung der Objekt-Segment-Zuordnung ist in der zuvor zitierten Dissertation von Kirchner detailliert beschrieben.

Treten nahe beieinander liegende Objekte auf, können jedoch Mehrdeutigkeiten entstehen, das heißt, es können Segmente auftreten, die sowohl dem einen wie auch dem anderen Objekt zugeordnet werden könnten. Zur eindeutigeren Zuordnung von Segmenten zu Objekten werden daher für alle Segmente, die einem Objekt mit einem Merkmal zugeordnet werden könnten, Kreuzkorrelationsfunktionen für den das Merkmal definierenden Vergleichsverlauf der Echopulsbreitenwerte entlang eines Konturabschnitts des Objekts und einen durch die Abstandsbildpunkte und die diesen zugeordneten korrigierten Echopulsbreitenwerte gebildeten aktuellen Verlauf der Echopulsbreiten für ein Segment gebildet. Die Verläufe sind dabei in Feldern in der Reihenfolge der entsprechenden Bildpunkte mit zunehmendem Polarwinkel abgespeichert.

Dabei wird die Kreuzkorrelationsfunktion für ein Feld $R_i$ und ein Feld $V_i$ für eine Verschiebung k (k ist eine natürliche Zahl) folgendermaßen berechnet:

$$K(k) = \frac{\sum_{i=k+1}^{N} \left(R_{i-k} - \overline{R}\right)\left(V_i - \overline{V}\right)}{\sqrt{\sum_{i=k+1}^{N} \left(R_{i-k} - \overline{R}\right)^2 \sum_{i=1}^{N} \left(V_i - \overline{V}\right)^2}}$$

Die Verschiebung k entlang des Vektors entspricht dabei einer tatsächlichen räumlichen Verschiebung in der Abtastebene tangential zu dem Laserstrahlbündel 30, um eine der Winkelauflösung des Laserscanners 10 entsprechende Länge.

Weist die Kreuzkorrelationsfunktion als Funktion der Verschiebung k ein Maximum auf, das einen vorgegebenen Erkennungsschwellwert überschreitet, so wird davon ausgegangen, dass das entsprechende Merkmal in dem Segment wenigstens teilweise vorhanden ist. Das Segment wird dann dem Objekt zugeordnet. Andernfalls kann es einem anderen Objekt zugeordnet werden.

Bei einer anderen Alternative kann statt der Kreuzkorrelationsfunktion die mittlere quadratische Abweichung der Verläufe als Funktion einer relativen Verschiebung k der Verläufe voneinander verwendet werden, die folgendermaßen definiert ist:

$$F(k) = \frac{1}{N-k} \sum_{i=k+1}^{N} \left(R_{i-k} - V_i\right)^2$$

Nachdem diese Zuordnung für jedes Objekt durchgeführt wurde, können Segmente auftreten, die keinem bislang aufgetretenen Objekt zugeordnet werden können. In Schritt S 18 werden daher aus noch nicht zugeordneten Segmenten neue Objekte gebildet. Dies kann mit bekannten Verfahren durchgeführt werden, wie sie beispielsweise in der Dissertation von Kirchner oder der oben genannten deutschen Patentanmeldung beschrieben sind.

In Schritt S20 werden Lagen der Objekte ermittelt. Dabei werden wiederum die den Objekten zugeordneten Merkmale bzw. Vergleichsverläufe der Echopulsbreiten verwendet. Wird nämlich ein Teil eines Objekts durch ein anderes Objekt verdeckt, so können sich Ungenauigkeiten in der Lage des wenigstens teilweise verdeckten Objekts ergeben, die ohne Verwendung des Merkmals nicht einfach zu beseitigen sind.

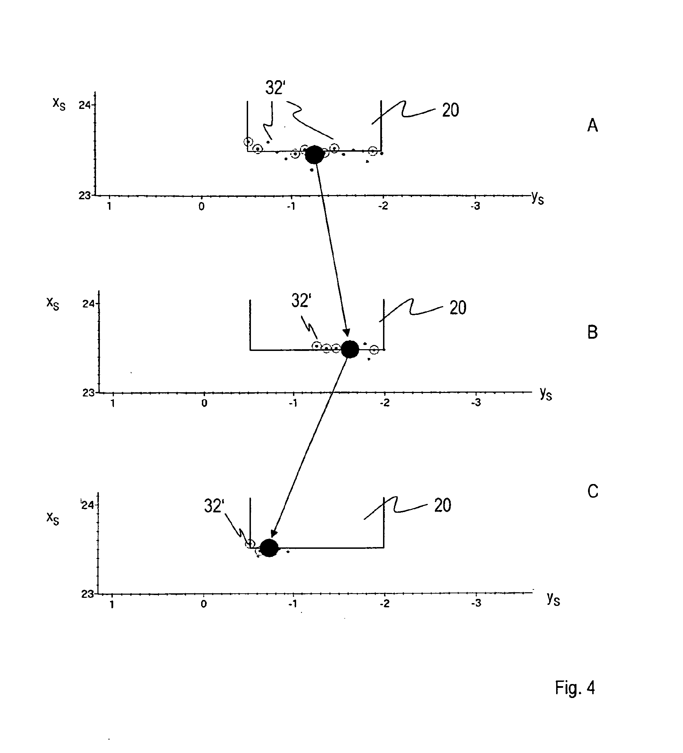

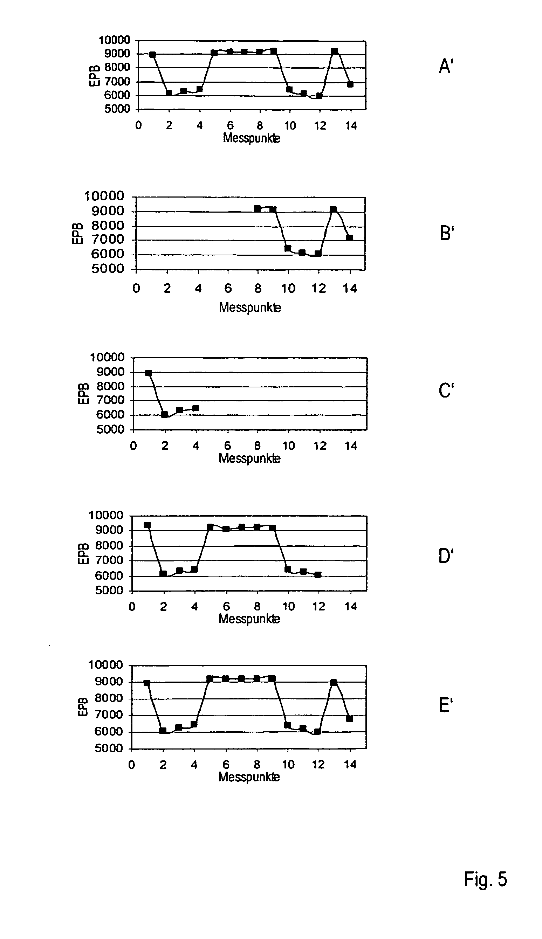

Dies ist in den Fig. 4 und 5 genauer gezeigt. Die Diagramme in diesen Figuren beziehen sich auf eine Situation ähnlich der in Fig. 1, in der ein vor dem Laserscanner 10 angeordnetes, stehendes Fahrzeug 20, von dem für den Laserscanner 10 nur die Heckpartie sichtbar ist, durch einen sich parallel zu der Heckpartie bewegenden Fußgänger 22 teilweise verdeckt wird.

In Fig. 4 sind die während der Bewegung des Fußgängers erfassbaren Abstandsbildpunkte 32' des Kraftfahrzeugs 20 in drei aufeinander folgenden Stadien A, B und C gezeigt. Die Abstandsbildpunkte, die innerhalb eines Kreises liegen, weisen dabei eine gegenüber den anderen Abstandsbildpunkten deutlich erhöhte korrigierte Echopulsbreite auf, die durch die Rückstrahler in den Heckleuchten 38 und 38' sowie die retroreflektierende Fläche des Kennzeichens 42 hervorgerufen werden.

Die den Stadien A, B und C entsprechenden Diagramme A bis C in Fig. 4 zeigen dabei, dass zunächst die gesamte Heckpartie für den Laserscanner 10 sichtbar ist (vgl. Diagramm A). Der sich in der Darstellung in Fig. 4 von links nach rechts bewegende Fußgänger verdeckt nun, wie in Diagramm B sichtbar, zunächst den linken Teil des Kraftfahrzeugs 20, so dass für den Laserscanner 10 nur der rechte Teil der Heckpartie erfassbar ist. Zu einem späteren Zeitpunkt hat sich der Fußgänger 22 vor den rechten Teil der Heckpartie bewegt, so dass nun für den Laserscanner 10, wie in Diagramm C gezeigt, nur der linke Teil des Hecks sichtbar ist. Würde nun die Lage des dem Kraftfahrzeug 18 entsprechenden Objekts allein durch die geometrischen Schwerpunkte der diesem Objekt bei einem konventionellen Objektverfolgungsverfahren zugeordneten Bildpunkte bestimmt, so ergäbe sich eine scheinbare Bewegung des tatsächlich stehenden Fahrzeugs 20. Zur Veranschaulichung sind in den Diagrammen in Fig. 4 die geometrischen Schwerpunkte durch schwarze Kreisflächen gekennzeichnet und zur Verdeutlichung der nur scheinbaren Bewegung durch Pfeile miteinander verbunden.

Um dieses Problem zu umgehen, wird für jedes Objekt zunächst überprüft, ob dieses teilweise durch ein vor ihm liegendes Objekt verdeckt sein kann. Dies kann beispielsweise immer dann vermutet werden, wenn in einer Kontur eines Objekts Lücken auftreten, in denen Objekte mit geringerem Abstand zu dem Laserscanner 10 auftreten, wenn die Größe des Objekts in dem aktuellen Zyklus kleiner ist als in einem vorhergehenden Zyklus oder wenn der bei einer Anordnung der Abstandsbildpunkte in Richtung zunehmender Polarwinkel an einem ersten oder letzten Bildpunkt eines Objekts in Richtung zu- bzw. abnehmender Polarwinkel nächster Abstandsbildpunkt einen wesentlich kleineren Abstand aufweist.

Für den entsprechenden Konturabschnitt wird dann nach der Lage des Maximums der Kreuzkorrelationsfunktion, d.h. der Verschiebung k bei der diese ein Maximum annimmt, gesucht und anhand der Kreuzkorrelationsfunktion festgestellt, welchem Abschnitt des Objekts ein gegebener Konturabschnitt bzw. entsprechende Segmente entspricht bzw. entsprechen. Dies ist in den Diagrammen in Fig. 5 veranschaulicht, die in größerer zeitlicher Auflösung den Stadien A bis C in Fig. 4 entsprechen. Die Diagramme zeigen dabei jeweils die Echopulsbreite in beliebigen aber festen Einheiten als Funktion des Feldindex des Feldes der aktuellen Echopulsbreitenwerte für den dem Fahrzeugheck entsprechenden Konturabschnitt. Wie in den Fig. 5A' bis E', gezeigt, bleibt hierzu im Allgemeinen genug Struktur des durch die Rückstrahler der Heckleuchten und das Kraftfahrzeugkennzeichen gegebenen Echopulsbreitenverlaufs. Auf diese Weise kann beispielsweise festgestellt werden, dass in dem Abstandsbild, das ausschnittsweise in dem Diagramm B in Fig. 4 gezeigt ist, das Segment nur dem rechten Teil des Fahrzeugs entspricht, so dass dieses entsprechend der Ausdehnung des Merkmals bzw. des dem Merkmal entsprechenden Konturabschnitts nach links verlängert werden kann, so dass der geometrische Schwerpunkt in der korrekten Lage bestimmt wird.

Nach der Ermittlung der Lagen werden für alle Objekte die Echopulsbreiten-Vergleichsverläufe ermittelt bzw. aktualisiert, wenn keine Teilverdeckung erkannt wurde. Bei neuen Objekten wird dazu überprüft, ob diese entsprechende geradlinige Konturabschnitte und wenigstens einen den Mindestechopulsbreitenwert überschreitenden, einem Bildpunkt des Konturabschnitts zugeordneten Echopulsbreitenwertes aufweisen. Die Mindestechopulsbreite ist so bestimmt, dass von Reflektoren, wie zum Beispiel Rückstrahlern in den Heckleuchten 36, 36', 38, 38', den Kraftfahrzeugkennzeichen 40 oder 42 sowie Reflektoren 44 an den Leitpfosten 24 am Fahrbahnrand oder von Verkehrsschildern 28 zurückgeworfene Echopulse einen über der Mindestechopulsbreite liegenden korrigierten Echopulsbreitenwert aufweisen, während nur diffus von sonstigen Oberflächen auf Gegenständen zurückgeworfene Echopulse aufgrund ihrer niedrigeren Echopulsenergie einen korrigierten Echopulsbreitenwert unterhalb der Mindestechopulsbreite aufweisen.

Die Aktualisierung hat den Vorteil, dass in aufeinander folgenden Bildern die Echopulsbreiten-Vergleichsverläufe und die in einem aktuellen Abstandsbild auftretenden Verläufe entsprechender Segmente ähnliche Abstandsbildpunktanzahlen aufweisen und daher einfach miteinander verglichen werden können.

Für solche Objekte, die bereits im vorhergehenden Zyklus erkannt wurden, werden zusätzlich Geschwindigkeiten ermittelt.

In Schritt S 22 werden die neuen Objekte klassifiziert, d.h. den neuen Objekten werden Objektklassen zugeordnet.

Dazu sind beispielhaft Objektklassen für Personenkraftwagen, Lastkraftwagen und Busse, Leitpfosten, Verkehrsschilder und sonstige Gegenstände einschließlich Fußgängern bzw. entsprechende Objekte vorgesehen. Die Objektklassen sind jeweils durch Zuordnungskriterien festgelegt. Ein Objekt wird einer Objektklasse nur dann zugeordnet, wenn es alle Zuordnungskriterien für die Objektklasse erfüllt.

Ein Objekt fällt in die Objektklasse für Personenkraftwagen, wenn es die folgenden Zuordnungskriterien erfüllt: Es besitzt eine Länge zwischen 2,5 m und 6 m, eine Breite zwischen 1,5 m und 2,2 m und einen Echopulsbreitenverlauf entlang einer der Breitseiten, d.h. entweder der Front- oder Heckpartie, der über die gesamte Breite wie einer der Referenzverläufe verläuft, die für die Heckpartie wie der in Fig. 5A gezeigte und für die Frontseite wie der in Fig. 5A gezeigte Echopulsbreitenverlauf ohne die seitlichen Peaks gegeben sind. Ist nur eine Seite sichtbar, wird als Zuordnungskriterium verwendet, dass das Objekt eine Seite mit einer Länge zwischen 2,5 m und 6 m aufweist oder dass es eine Seite mit einer Breite zwischen 1,5 m und 2,2 m besitzt, die den gerade beschriebenen Referenzverlauf für die Echopulsbreite aufweist.

Ein Objekt fällt in die Objektklasse für Lastkraftwagen, wenn es die drei folgenden Zuordnungskriterien erfüllt: Es besitzt eine Länge zwischen 6 m und 25 m, eine Breite zwischen 2,2 m und 3,0 m und einen Echopulsbreitenverlauf entlang einer der Breitseiten, d.h. entweder der Front- oder Heckpartie, der über die gesamte Breite wie einer der Referenzverläufe verläuft, die für die Heckpartie wie der in Fig. 5A gezeigte und für die Frontseite wie der in Fig. 5A gezeigte Echopulsbreitenverlauf ohne die seitlichen Peaks gegeben sind. Ist nur eine Seite sichtbar, wird als Zuordnungskriterium verwendet, dass das Objekt eine Seite mit einer Länge zwischen 6 m und 25 m aufweist oder dass es eine Seite mit einer Breite zwischen 2,2 m und 3,0 m besitzt, die den gerade beschriebenen Referenzverlauf für die Echopulsbreite aufweist. Ein Objekt fällt in die Objektklasse für Leitpfosten, wenn es die zwei folgenden Zuordnungskriterien erfüllt: Es weist eine maximale Ausdehnung, gegeben durch die Länge der längsten Seite des kleinsten Rechtecks, das den Querschnitt des Leitpfostens bzw. die für diesen erfassten Abstandsbildpunkte umschließt, von 30 cm, oder nur einen einzelnen Bildpunkt auf. Wenigstens einem Abstandsbildpunkt ist ein die Mindestechopulsbreite übersteigender korrigierter Echopulsbreitenwert zugeordnet. Das zweite Zuordnungskriterium basiert darauf, dass Leitpfosten Retroreflektoren aufweisen.

Ein Objekt fällt in die Objektklasse für Verkehrsschilder, wenn es die folgenden beiden Zuordnungskriterien erfüllt: Es ist flächig mit einer Breite zwischen 0,5 m und 3 m und hat daher eine Tiefe von weniger als 30 cm. Es weist über die gesamte Breite eine retroreflektierende Oberfläche und daher die Mindestechopulsbreite übersteigende Werte für die Echopulsbreite auf, so dass allen dem Objekt zugeordneten Abstandsbildpunkten jeweils ein die Mindestechopulsbreite übersteigender Echopulsbreitenwert zugeordnet ist.

Ein Objekt fällt in die Objektklasse für sonstige Objekte, falls es in keine der Objektklassen für Personenkraftwagen, Lastkraftwagen oder Leitpfosten fällt.

Es wird daher zunächst ein Schwellwert für den korrigierten Echopulsbreitenwert gesetzt, der einer Mindestechopulsenergie entspricht, die ein von einem der Reflektoren zurückgeworfener Echopuls wenigstens aufweist. In einem nächsten Schritt werden Dimensionen der neuen Objekte ermittelt, indem die kleinsten Rechtecke ermittelt werden, die noch alle dem jeweiligen Objekt zugeordneten Bildpunkte umschließen.

Zunächst werden dann für alle neuen, noch nicht klassifizierten Objekte die beiden ersten Zuordnungskriterien für Personenkraftwagen geprüft. Für solche Objekte, die diesen Zuordnungskriterien genügen, wird dann der Echopulsbreitenverlauf entlang einer der Seiten mit dem Referenzechopulsbreitenverlauf für Personenkraftwagen verglichen, wozu wie oben ausgeführt, entsprechende Kreuzkorrelationen ermittelt werden. Findet sich eine Übereinstimmung wird dem Objekt die Objektklasse für Personenkraftwagen zugeordnet.

Dann werden für alle neuen, noch nicht klassifizierten Objekte die beiden ersten Zuordnungskriterien für Lastkraftwagen geprüft. Für solche Objekte, die diesen Zuordnungskriterien genügen, wird dann der Echopulsbreitenverlauf entlang einer der Seiten mit dem Referenzechopulsbreitenverlauf für Lastkraftwagen verglichen, wozu wie oben ausgeführt, entsprechende Kreuzkorrelationen ermittelt werden. Findet sich eine Übereinstimmung wird dem Objekt die Objektklasse für Lastkraftwagen zugeordnet.

Für alle neuen, noch nicht klassifizierten Objekte wird dann geprüft, ob deren größte Ausdehnung kleiner als 30 cm ist. Ist dies der Fall, wird geprüft, ob wenigstens einem dem Objekt zugeordneten Abstandsbildpunkt ein Echopulsbreitenwert zugeordnet ist, der den Schwellwert übersteigt. Ist dies der Fall, wird dem Objekt die Objektklasse für Leitpfosten zugeordnet. Schließlich wird für alle neuen, noch nicht klassifizierten Objekte geprüft, ob deren Breite zwischen 0,5 m und 3 m ist und, falls sichtbar, deren Tiefe kleiner als 30 cm. Weiterhin wird geprüft, ob es über die gesamte Breite Echopulsbreitenwerte aufweist, die über dem Schwellwert liegen. Ist dies der Fall, wird dem Objekt der Objektklasse für Verkehrsschilder zugeordnet.

Allen verbliebenen neuen Objekten wird dann die Objektklasse für sonstige Objekte zugeordnet.

Für die Situation in Fig. 1 ergeben diese Schritte beispielsweise folgendes:

Der Personenkraftwagen 18 wird aufgrund seiner Abmessungen und seines Echopulsbreitenverlaufs entlang der Heckpartie eindeutig erkannt.

Das dem Lastkraftwagen 20 entsprechende Objekt könnte, da nur dessen Heckpartie bzw. eine entsprechende Anordnung von Abstandsbildpunkten von dem Laserscanner 10 erfassbar ist, ein Objekt der Klasse Lastkraftwagen oder ein Verkehrschild sein. Das dem Verkehrsschild 28 entsprechende Objekt könnte, wenn dessen Lage relativ zu dem Laserscanner 10 und eventuelle Teilverdeckungen nicht berücksichtigt werden, aufgrund seiner Ausdehnung ebenfalls ein Objekt der Klasse Lastkraftwagen oder ein Verkehrschild sein.

Ein Vergleich der Referenzverläufe ergibt aber eindeutig, dass dem dem Lastkraftwagen 20 entsprechenden Objekt die Objektklasse für Lastkraftwagen zuzuordnen ist, während dies für das dem Verkehrsschild 28 entsprechende Objekt nicht der Fall ist. Umgekehrt ergibt die Prüfung, ob alle dem Objekt zugeordneten Echopulsbreitenwerte die Mindestechopulsbreite übersteigen, eindeutig, dass dem dem Lastkraftwagen 20 entsprechenden Objekt nicht die Objektklasse für Verkehrsschilder zuzuordnen ist, dem dem Verkehrsschild 28 entsprechenden Objekt jedoch wohl.

Dem dem in Fig. 1 unteren Leitpfosten entsprechenden Objekt wird eindeutig die Objektklasse für Leitpfosten zugeordnet, da es nur einen Abstandsbildpunkt aufweist, dem ein die Mindestechopulsbreite übersteigender Wert der Echopulsbreite zugeordnet ist.

Das dem Pfahl 26 entsprechende Objekt dagegen erfüllt zwar das Zuordnungskriterium für die Objektklasse für Leitpfosten, das sich auf die Ausdehnung des Objekts bezieht, nicht jedoch das Zuordnungskriterium in Bezug auf das Auftreten eines die Mindestechopulsbreite übersteigenden Wertes für die Echopulsbreite, da dessen Oberfläche nicht stark reflektierend ist.

Den dem Pfahl 26 und dem Fußgänger 22 entsprechenden Objekten wird daher die Objektklasse für sonstige Gegenstände zugeordnet.

Zu diesen Klassifizierungen ist nur ein Abstandsbild und keine komplizierte Analyse der relativen Lagen der Objekte zueinander und insbesondere keine dynamische Information über das Verhalten der Objekte notwendig, so dass die Klassifizierung einfach, zuverlässig und schnell erfolgen kann.

In Schritt S24 werden dann neue Objektlagen bzw. Lagen der Bezugspunkte der Objekte im nächsten Zyklus prädiziert. In Schritt S26 werden die ermittelten Objektlagen und -geschwindigkeiten sowie die Objektklassen für die in dem aktuellen Zyklus erkannten Objekte zur weiteren Verwendung ausgegeben bzw. gespeichert.

Das Verfahren kann dann in einem neuen Zyklus mit Schritt S 10 fortgesetzt werden.

Da durch die Objektverfolgung Informationen über das dynamische Verhalten verfügbar sind und im Verlauf der Objektverfolgung Objekte in anderen, gegebenenfalls vollständigeren Ansichten erfasst werden können, kann bei einem anderen bevorzugten Ausführungsbeispiel für das erfindungsgemäße Verfahren in vorgegebenen Intervallen, beispielsweise jedem oder jedem fünften Zyklus, eine Neuklassifikation der in den entsprechenden Zyklen bereits bekannten Objekte erfolgen, bei der auch die Informationen in Bezug auf das dynamische Verhalten, beispielsweise die maximale erfasste Geschwindigkeit zur Klassifizierung herangezogen wird.

Bei anderen Ausführungsformen kann weiterhin anstatt der Echopulsbreite die Echopulsfläche oder die Echopulshöhe entsprechend verwendet werden.

Bei noch einer anderen Ausführungsform werden die den Objekten zugeordneten Objektklassen zur Festlegung von Parametern für eine Objektverfolgung verwendet, wie dies in der in der am 28. September 2001 eingereichten deutschen Patentanmeldung mit dem amtlichen Aktenzeichen 101 48 071.7 beschrieben ist, deren Inhalt hiermit durch Bezugnahme in die Beschreibung aufgenommen wird.

Bezugszeichenliste

| | |
|---|---|
| 10 | Laserscanner |
| 12 | Fahrzeug |
| 14 | Erfassungsbereich |
| 16 | Fahrbahn |
| 18 | Personenkraftwagen |
| 20 | Lastkraftwagen |
| 22 | Fußgänger |
| 24 | Leitpfosten |
| 26 | Pfahl |
| 28 | Verkehrsschild |
| 30 | Laserstrahlbündel |
| 32, 32', 32" | Gegenstandspunkte |
| 34 | Datenverarbeitungseinrichtung |
| 36, 36' | Heckleuchten |
| 38, 38' | Heckleuchten |
| 40 | Kraftfahrzeugkennzeichen |
| 42 | Kraftfahrzeugkennzeichen |
| 44 | Reflektoren |
| L | Längsachse |

Patentansprüche

1.   Verfahren zur Klassifizierung von Objekten, die Gegenständen (18, 20, 22, 24, 26, 28) im Erfassungsbereich eines Sensors (10) für elektromagnetische Strahlung, insbesondere eines Laserscanners, entsprechen, auf der Basis wenigstens eines von dem Sensor (10) erfassten Abstandsbildes des Erfassungsbereichs (14) mit Abstandsbildpunkten (32, 32', 32"), die jeweils durch Aussendung eines Pulses elektromagnetischer Strahlung und Detektion des von einem Punkt oder Bereich auf einem Gegenstand (18, 20, 22, 24, 26, 28) jeweils als Echopuls zurückgeworfenen Pulses sowie Erfassung wenigstens einer von der Energie des Echopulses abhängigen Echopulseigenschaft des Echopulses erhalten wurden, wobei die Echopulsenergie die von dem Sensor (10) empfangbare Energie des Echopulses ist und von den Remissionseigenschaften der Oberfläche des Punkts oder Bereichs abhängt, und denen jeweils wenigstens ein Wert für einen Parameter für die Echopulseigenschaft zugeordnet ist,
bei dem wenigstens einem Objekt Abstandsbildpunkte (32, 32', 32") des Abstandsbildes zugeordnet werden, und
bei dem dem Objekt in Abhängigkeit von wenigstens einem der Parameterwerte für die Echopulseigenschaft, die den dem Objekt zugeordneten Abstandsbildpunkten zugeordnet sind, wenigstens eine Objektklasse zugeordnet wird,
für die wenigstens ein Zuordnungskriterium vorgesehen wird, das ein Objekt erfüllen muss, damit diesem die Objektklasse zugeordnet werden kann,
wobei sich das Zuordnungskriterium auf wenigstens einen der Parameterwerte für die Echopulseigenschaft bezieht, und
wobei mehrere Objektklassen vorgegeben werden, die sich wenigstens in dem Zuordnungskriterium in Bezug auf den wenigstens einen Parameterwert für die Echopulseigenschaft unterscheiden.

2.   Verfahren nach Anspruch 1,
dadurch gekennzeichnet,
dass die den Abstandsbildpunkten (32, 32', 32") zugeordneten Parameterwerte für die Echopulseigenschaft in Bezug auf den durch den jeweiligen Abstandsbildpunkt (32, 32', 32") gegebenen Abstand korrigiert werden.

3.   Verfahren nach Anspruch 1 oder 2,
dadurch gekennzeichnet,
dass als Echopulseigenschaft eine Breite des jeweiligen Echopulses oder eines entsprechenden Signalpulses eines den Echopuls empfangenden Empfangselements bei einem vorgegebenen Pegel verwendet wird.

4.   Verfahren nach Anspruch 1 oder 2,
dadurch gekennzeichnet,
dass als Echopulseigenschaft eine Pulsfläche des jeweiligen Echopulses verwendet wird.

5.   Verfahren nach Anspruch 1 oder 2,
dadurch gekennzeichnet,

**dass** als Echopulseigenschaft eine Pulshöhe des jeweiligen Echopulses verwendet wird.

6. Verfahren nach einem der vorhergehenden Ansprüche,
**dadurch gekennzeichnet,**
**dass** wenigstens eine Objektklasse für Objekte vorgegeben wird, die ein entsprechendes vorgegebenes Zuordnungskriterium in Bezug auf die Größe des Parameters für die wenigstens eine Echopulseigenschaft erfüllen, und
**dass** zur Zuordnung einer Objektklasse zu dem Objekt geprüft wird, ob dieses das Zuordnungskriterium erfüllt.

7. Verfahren nach einem der vorhergehenden Ansprüche,
**dadurch gekennzeichnet,**
**dass** wenigstens eine Objektklasse für Objekte vorgesehen ist, denen wenigstens ein durch eine vorgegebene Variation der Parameterwerte für die Echopulseigenschaft gegebenes Merkmal zugeordnet werden kann, und
**dass** zur Zuordnung einer Objektklasse zu einem Objekt das Zuordnungskriterium geprüft wird, ob das Objekt das Merkmal aufweist.

8. Verfahren nach Anspruch 7,
**dadurch gekennzeichnet,**
**dass** das Merkmal durch einen Referenzverlauf des Parameters für die Echopulseigenschaft entlang wenigstens eines Abschnitts einer Kontur des Objekts gegeben ist.

9. Verfahren nach Anspruch 8,
**dadurch gekennzeichnet,**
**dass** eine Objektklasse für Objekte vorgegeben ist, die mehrere vorgegebene Merkmale in einer vorgegebenen Relativlage zueinander aufweisen, und
**dass** zur Zuordnung einer Objektklasse zu einem Objekt das Zuordnungskriterium geprüft wird, ob das Objekt die Merkmale aufweist.

10. Verfahren nach Anspruch 8 oder 9,
**dadurch gekennzeichnet,**
**dass** der Referenzverlauf durch eine Funktion gegeben ist, die von einer sich entlang des Konturabschnitts monoton ändernden Variablen abhängt.

11. Verfahren nach Anspruch 8 oder 9,
**dadurch gekennzeichnet,**
**dass** der Referenzverlauf durch wenigstens ein Feld vorgegebener Länge mit Parameterwerten für die Echopulseigenschaft gegeben ist,
wobei jeweils ein Feldelement einer entsprechenden Position auf dem Konturabschnitt entspricht.

12. Verfahren nach einem der Ansprüche 8 bis 11,

**dadurch gekennzeichnet,**
**dass** zur Suche nach dem gegebenen Merkmal eine mittlere Abweichung zwischen dem Referenzverlauf des Parameters für die Echopulseigenschaft und einem durch gewählte, dem Objekt zugeordnete Abstandsbildpunkte (32, 32', 32") und diesen zugeordnete Parameterwerte für die Echopulseigenschaft gegebenen aktuellen Verlauf des Parameters der Echopulseigenschaft verwendet wird.

13. Verfahren nach einem der Ansprüche 8 bis 12,
**dadurch gekennzeichnet,**
**dass** zur Suche nach dem gegebenen Merkmal eine Kreuzkorrelation zwischen dem Referenzverlauf des Parameters für die Echopulseigenschaft und einem durch gewählte, dem Objekt zugeordnete Abstandsbildpunkte (32, 32', 32") und diesen zugeordnete Parameterwerte für die Echopulseigenschaft gegebenen aktuellen Verlauf des Parameters der Echopulseigenschaft verwendet wird.

14. Verfahren nach einem der vorhergehenden Ansprüche,
**dadurch gekennzeichnet,**
**dass** wenigstens eine Objektklasse für Objekte vorgesehen ist, die wenigstens ein weiteres Zuordnungskriterium in Bezug auf die Kontur des Objekts erfüllen.

15. Verfahren nach Anspruch 14,
**dadurch gekennzeichnet,**
**dass** das weitere Zuordnungskriterium sich auf eine durch die erfasste Kontur des Objekts gegebene Ausdehnung des Objekts bezieht.

16. Verfahren nach Anspruch 14 oder 15,
**dadurch gekennzeichnet,**
**dass** das weitere Zuordnungskriterium sich auf die Form wenigstens eines Abschnitts der Kontur bezieht.

17. Verfahren nach einem der Ansprüche 14 bis 16,
**dadurch gekennzeichnet,**
**dass** das weitere Zuordnungskriterium sich auf die Verteilung der die Kontur in dem Abstandsbild bildenden Abstandsbildpunkte bezieht.

18. Verfahren nach einem der Ansprüche 14 bis 17,
**dadurch gekennzeichnet,**
**dass** das weitere Zuordnungskriterium sich auf die Lage des Objekts in Bezug auf andere Objekte oder die absolute Lage des Objekts bezieht.

19. Verfahren nach einem der vorhergehenden Ansprüche,
**dadurch gekennzeichnet,**
**dass** es bei einem Verfahren zur Objektverfolgung verwendet wird, bei dem Objekte auf der Basis einer zeitlichen Folge von Abstandsbildern verfolgt werden.

20. Verfahren nach einem der vorhergehenden Ansprüche,
**dadurch gekennzeichnet,**
**dass** zur Zuordnung einer Objektklasse zu einem Objekt auch bei der Objektverfolgung ermittelte Eigenschaften des Objekts verwendet werden.

21. Verfahren nach einem der vorhergehenden Ansprüche,
**dadurch gekennzeichnet,**
**dass** dem Objekt für eine diesem zugeordnete Objektklasse ein Wert für eine Zuordnungsgüte zugeordnet wird.

22. Verfahren nach Anspruch 21,
**dadurch gekennzeichnet,**
**dass** dem Objekt jede bei dem Verfahren verwendete Objektklasse und jeweils ein entsprechender Wert für die Zuordnungsgüte zugeordnet werden.

23. Computerprogramm mit Programmcode-Mitteln, um das Verfahren nach einem der Ansprüche 1 bis 22 durchzuführen, wenn das Programm auf einem Computer ausgeführt wird.

24. Computerprogrammprodukt mit Programmcode-Mitteln, die auf einem computerlesbaren Datenträger gespeichert sind, um das Verfahren nach einem der Ansprüche 1 bis 22 durchzuführen, wenn das Computerprogrammprodukt auf einem Computer ausgeführt wird.

25. Vorrichtung zur Klassifizierung von Objekten mit mindestens einem optoelektronischen Sensor (10), vorzugsweise einem Laserscanner, mittels dessen Abstandsbilder eines Erfassungsbereichs mit Abstandsbildpunkten (32, 32', 32") erfassbar sind, die jeweils durch Aussendung eines Pulses elektromagnetischer Strahlung und Detektion eines von einem Punkt oder Bereich auf einem Gegenstand (18, 20, 22, 24, 26, 28) jeweils als Echopuls zurückgeworfenen Anteils des Pulses sowie Erfassung wenigstens einer von der Energie des Echopulses abhängigen Echopulseigenschaft des Echopulses erhältlich sind, wobei die Echopulsenergie die von dem Sensor (10) empfangbare Energie des Echopulses ist und von den Remissionseigenschaften der Oberfläche des Punkts oder Bereichs abhängt, und denen jeweils wenigstens ein Wert für einen Parameter für die Echopulseigenschaft zugeordnet ist, und mit einer mit dem optoelektronischen Sensor (10) verbundenen Datenverarbeitungseinrichtung (34), umfassend:

Mittel zur Zuordnung von Abstandsbildpunkten (32, 32', 32") des Abstandsbildes zu wenigstens einem Objekt, und
Mittel zur Zuordnung wenigstens einer Objektklasse zu dem Objekt in Abhängigkeit von wenigstens einem der Parameterwerte für die Echopulseigenschaft, die den dem Objekt zugeordneten Abstandsbildpunkten zugeordnet sind,
wobei für die Objektklasse wenigstens ein Zuordnungskriterium vorgesehen ist, das ein Objekt erfüllen muss, damit diesem die Objektklasse zugeordnet werden kann,
wobei sich das Zuordnungskriterium auf wenigstens einen der Parameterwerte für die Echopulseigenschaft bezieht, und
wobei mehrere Objektklassen vorgegeben sind, die sich wenigstens in dem Zuordnungskriterium in Bezug auf den wenigstens einen Parameterwert für die Echopulseigenschaft unterscheiden.

**Claims**

1. A method for the classification of objects which correspond to real objects (18, 20, 22, 24, 26, 28) in the detection area of a sensor (10) for electromagnetic radiation, in particular of a laser scanner, on the basis of at least one distance map of the detection area (14) detected by the sensor (10) and having distance map points (32, 32', 32"), which were respectively obtained through the emission of a pulse of electromagnetic radiation and detection of the pulse reflected as an echo pulse from a point or area on a real object (18, 20, 22, 24, 26, 28), as well as the detection of at least one echo pulse property of the echo pulse dependent on the energy of the echo pulse, wherein the echo pulse energy is the energy which can be received by the sensor (10) and is dependent on the remission properties of the surface of the point or area, wherein at least one value for a parameter of the echo pulse property is respectively assigned to the distance map points,
wherein distance map points (32, 32', 32") of the distance map are assigned to the at least one object,
wherein at least one object class is assigned to the object in dependence on at least one of the parameter values of the echo pulse property which are assigned to the distance map points associated with the object,
at least one assignment criterion being provided for the object class which the object has to fulfil, for it to be assigned to the object class, wherein the assignment criterion relates to at least one of the parameter values for the echo pulse property and
wherein a plurality of object classes are preset which are distinguished at least in the assignment criterion in relation to the at least one parameter value for the echo pulse property.

2. A method in accordance with claim 1, **characterized in that** the parameter values for the echo pulse property assigned to the distance map points (32, 32', 32") are corrected with reference to the distance given by the respective distance map point (32, 32', 32" ).

3. A method in accordance with claim 1 or claim 2, **characterized in that** a width of the respective echo pulse, or of a corresponding signal pulse of an echo pulse receiving receiver element at a preset level is used as an echo pulse property.

4. A method in accordance with claim 1 or claim 2, **characterized in that** a pulse area of the respective echo pulse is used as an echo pulse property.

5. A method in accordance with claim 1 or claim 2, **characterized in that** a pulse height of the respective echo pulse is used as an echo pulse property.

6. A method in accordance with any one of the preceding claims, **characterized in that** at least one object class is predetermined for objects, which satisfy a corresponding preset assignment criterion with respect to the size of the parameter for the at least one echo pulse property and **in that** a check is made for the assignment of an object class to the object, whether the object fulfils the assignment criterion.

7. A method in accordance with any one of the preceding claims, **characterized in that** at least one object class for objects is provided, to which at least one feature can be assigned which is given by a preset variation of the parameter values for the echo pulse property, and **in that**, for the assignment of an object class to the object, the assignment criterion is tested, to see whether the object exhibits this feature.

8. A method in accordance with claim 7, **characterized in that** the feature is given by a reference development of the parameter for the echo pulse property along at least one section of a contour of the object.

9. A method in accordance with claim 8, **characterized in that** an object class is preset for objects which exhibit a plurality of provided features in a predetermined relative position to one another and **in that**, for the assignment of an object class to an object, the assignment criterion is tested, to see whether the object exhibits these features.

10. A method in accordance with claim 8 or claim 9, **characterized in that** the reference development is given by a function which is dependent on a monotonically changing variable along the contour section.

11. A method in accordance with claim 8 or claim 9, **characterized in that** that the reference development is given by at least one field of predefined length with the parameter values for the echo pulse properties, wherein each field element corresponds to a corresponding position on the contour section.

12. A method in accordance with any one of the claims 8 to 11, **characterized in that** a mean deviation between the reference development of the parameter for the echo pulse property and a current development of the parameter of the echo pulse property given by selected distance map points (32, 32', 32") associated with the object and parameter values for the echo pulse property assigned to them is used for the search for a given feature.

13. A method in accordance with any one of the claims 8 to 12, **characterized in that** a cross correlation between the reference development of the parameter for the echo pulse property and a current development of the parameter of the echo pulse property given by selected distance map points (32, 32', 32") associated with the object and parameter values for the echo pulse property assigned to them is used for the search for a given feature.

14. A method in accordance with any one of the preceding claims, **characterized in that** at least one object class for objects is provided which satisfy at least one further assignment criterion relating to the contour of the object.

15. A method in accordance with claim 14, **characterized in that** the further assignment criterion relates to an extent of the object given by the detection of the contour of the object.

16. A method in accordance with claim 14 or claim 15, **characterized in that**

the further assignment criterion relates to the form of at least one section of the contour.

17. A method in accordance with any one of the claims 14 to 16,
**characterized in that**
the further assignment criterion relates to the distribution of the distance map points forming the contour in the distance map.

18. A method in accordance with any one of the claims 14 to 17,
**characterized in that**
the further assignment criterion relates to the position of the object with respect to other objects or to the absolute position of the object.

19. A method in accordance with any one of the preceding claims,
**characterized in that**
it is used in a process for object tracking, in which the objects are tracked on the basis of a time sequence of the distance maps.

20. A method in accordance with any one of the preceding claims,
**characterized in that**
properties of the object identified during the object tracking are used to assign an object class to an object.

21. A method in accordance with any one of the preceding claims,
**characterized in that**
a value for an allocation rating is assigned to the object for an object class assigned to it.

22. A method in accordance with claim 21,
**characterized in that**
each object class used in the method and in each case a corresponding value of the allocation rating is assigned to the object.

23. A computer program with program code means, to execute the method in accordance with any one of the preceding claims 1 to 22, when the program is run on a computer.

24. A computer program product with program code means, which are stored to a computer readable data processing medium, to execute the method in accordance with any one of the preceding claims 1 to 22, when the computer program product is run on a computer.

25. An apparatus for the classification of objects with at least one optoelectronic sensor (10), preferably a laser scanner, with which distance maps of the distance map points (32, 32', 32") of a detection area can be found, which are respectively obtained by the emission of a pulse of electromagnetic radiation and detection of the part of a pulse respectively reflected as an echo pulse from a point or area on a real object (18, 20, 22, 24, 26, 28), as well as by establishing at least one echo pulse property of the echo pulse dependent on the energy of the echo pulse, wherein the echo pulse energy is the energy of the echo pulse receivable by the sensor (10) and is dependent on the remission properties of the surface of the point or area,
wherein at least one value for a parameter of the echo pulse property is assigned to the distance map points, and with a data processing unit connected the optoelectronic sensor (10), including: means for the assignment of distance map points (32, 32', 32") of the distance map to the at least one object, and means for the assignment of at least one object class to the object in dependence on at least one of the parameter values for the echo pulse property which are assigned to the distance map points associated with the object,
wherein at least one assignment criterion is provided for the object class which the object has to fulfil for the object class to be assigned to it,
wherein the assignment criterion relates to at least one of the parameter values for the echo pulse property, and
wherein a plurality of object classes are preset which are distinguished at least in the assignment criterion in relation to the at least one parameter value for the echo pulse property.

**Revendications**

1. Procédé pour classifier des objets qui correspondent à des articles (18, 20, 22, 24, 26, 28) dans la zone de détection d'un capteur (10) pour un rayonnement électromagnétique, en particulier un scanneur laser, en se basant sur au moins une image de distance prise par le capteur (10) sur la zone de détection (14) avec des pixels de distance (32, 32', 32") qui ont été obtenus par émission d'une impulsion de rayonnement électromagnétique et par détection de l'impulsion renvoyée comme impulsion écho par un point ou par une zone sur un article (18, 20, 22, 24, 26, 28) ainsi que par détection d'au moins une propriété de l'impulsion écho dépendante de l'énergie de l'impulsion écho, l'énergie de l'impulsion écho étant l'énergie de l'impulsion écho recevable par le capteur (10) et dépendant des propriétés de réémission de la surface du point ou de la zone, pixels de distance auxquels est associée respectivement au moins une valeur pour un paramètre pour la propriété d'impulsion écho,
dans lequel on associe à au moins un objet des pixels de distance (32, 32', 32") de l'image de distance, et dans lequel on associe à l'objet au moins une classe d'objet en fonction de l'une au moins des valeurs de paramètre pour la propriété d'impulsion écho qui sont associées aux pixels de distance associés à l'objet,

classe pour laquelle on prévoit au moins un critère d'association auquel doit satisfaire un objet pour pouvoir associer à celui-ci la classe d'objet, le critère d'association se référant à l'une au moins des valeurs de paramètre pour la propriété d'impulsion écho, et

plusieurs classes d'objet étant prédéterminées qui se distinguent au moins par le critère d'association par rapport à ladite au moins une valeur de paramètre pour la propriété d'impulsion écho.

2.  Procédé selon la revendication 1,
    **caractérisé en ce que**
    les valeurs de paramètre associées aux pixels de distance (32, 32', 32") pour la propriété d'impulsion d'écho sont corrigées par rapport à la distance définie par le pixel de distance respectif (32, 32', 32").

3.  Procédé selon la revendication 1 ou 2,
    **caractérisé en ce que**
    à titre de propriété d'impulsion écho, on utilise une largeur de l'impulsion écho respective ou d'une impulsion de signal correspondante d'un élément récepteur recevant l'impulsion écho, à un niveau prédéterminé.

4.  Procédé selon la revendication 1 ou 2,
    **caractérisé en ce que**
    on utilise à titre de propriété d'impulsion écho une surface d'impulsion de l'impulsion écho respective.

5.  Procédé selon la revendication 1 ou 2,
    **caractérisé en ce que**
    on utilise à titre de propriété d'impulsion écho une hauteur d'impulsion de l'impulsion écho respective.

6.  Procédé selon l'une des revendications précédentes,
    **caractérisé en ce que**
    on prédétermine au moins une classe d'objet pour des objets qui satisfont à un critère d'association prédéterminé correspondant par rapport à la taille du paramètre pour ladite au moins une propriété d'impulsion écho, et
    pour l'association d'une classe d'objet à un objet, on vérifie si celui-ci satisfait au critère d'association.

7.  Procédé selon l'une des revendications précédentes,
    **caractérisé en ce que**
    il est prévu au moins une classe d'objet pour des objets auxquels on peut associer au moins une caractéristique donnée par une variation prédéterminée des valeurs de paramètre pour la propriété d'impulsion écho, et

**en ce que** pour l'association d'une classe d'objet à un objet, on vérifie le critère d'association pour savoir si l'objet présente la caractéristique.

8.  Procédé selon la revendication 7,
    **caractérisé en ce que**
    la caractéristique est donnée par une évolution de référence du paramètre pour la propriété d'impulsion écho le long d'au moins un tronçon d'un contour de l'objet.

9.  Procédé selon la revendication 8,
    **caractérisé en ce que**
    il est défini une classe d'objet pour des objets qui présentent plusieurs caractéristiques prédéterminées dans une position relative prédéterminée les uns par rapport aux autres, et
    **en ce que** pour l'association d'une classe d'objet à un objet, on vérifie le critère d'association pour savoir si l'objet présente les caractéristiques.

10. Procédé selon la revendication 8 ou 9,
    **caractérisé en ce que**
    l'évolution de référence est définie par une fonction qui dépend d'une variable qui se modifie de façon monotone le long du tronçon de contour.

11. Procédé selon la revendication 8 ou 9,
    **caractérisé en ce que**
    l'évolution de référence est définie par au moins un champ de longueur prédéterminée avec des valeurs de paramètre pour la propriété d'impulsion écho, un élément de champ respectif correspondant à une position correspondante sur le tronçon de contour.

12. Procédé selon l'une des revendications 8 à 11,
    **caractérisé en ce que**
    pour la recherche de la caractéristique donnée, on utilise un écart moyen entre l'évolution de référence du paramètre pour la propriété d'impulsion écho et une évolution actuelle du paramètre de la propriété d'impulsion écho, évolution qui est définie par des pixels de distance (32, 32', 32") choisis associés à l'objet et des valeurs de paramètre associées à ceux-ci.

13. Procédé selon l'une des revendications 8 à 12,
    **caractérisé en ce que**
    pour la recherche de la caractéristique donnée, on utilise une corrélation croisée entre l'évolution de référence du paramètre pour la propriété d'impulsion écho et une évolution actuelle du paramètre de la propriété d'impulsion écho, évolution qui est définie par des pixels de distance (32, 32', 32") choisis associés à l'objet et des valeurs de paramètre associées à ceux-ci.

**14.** Procédé selon l'une des revendications précédentes,
**caractérisé en ce que**
il est prévu au moins une classe d'objet pour des objets qui satisfont à au moins un autre critère d'association par rapport au contour de l'objet.

**15.** Procédé selon la revendication 14,
**caractérisé en ce que**
l'autre critère d'association se réfère à une extension de l'objet donnée par le contour détecté de l'objet.

**16.** Procédé selon la revendication 14 ou 15,
**caractérisé en ce que**
l'autre critère d'association se réfère à la forme d'au moins un tronçon du contour.

**17.** Procédé selon l'une des revendications 14 à 16,
**caractérisé en ce que**
l'autre critère d'association se réfère à la répartition des pixels de distance formant le contour dans l'image de distance.

**18.** Procédé selon l'une des revendications 14 à 17,
**caractérisé en ce que**
l'autre critère d'association se réfère à la position de l'objet par rapport à d'autres objets ou à la position absolue de l'objet.

**19.** Procédé selon l'une des revendications précédentes,
**caractérisé en ce que**
on l'utilise dans un procédé pour la poursuite d'objet dans lequel on poursuit des objets en se basant sur une succession temporelle d'images de distance.

**20.** Procédé selon l'une des revendications précédentes,
**caractérisé en ce que**
pour l'association d'une classe d'objet à un objet, on utilise également des propriétés de l'objet détectées lors de la poursuite de l'objet.

**21.** Procédé selon l'une des revendications précédentes,
**caractérisé en ce que**
pour une classe d'objet associée à l'objet, on lui associe une valeur pour une qualité d'association.

**22.** Procédé selon la revendication 21,
**caractérisé en ce que**
on associe à l'objet chaque classe d'objet utilisée lors du procédé et une valeur correspondante pour la qualité d'association.

**23.** Programme d'ordinateur présentant des moyens formant code de programme pour mettre en oeuvre le procédé selon l'une des revendications 1 à 22, lorsque le programme est exécuté sur un ordinateur.

**24.** Produit de programme d'ordinateur présentant des moyens formant code de programme qui sont mémorisés sur un support de données lisible à l'ordinateur pour mettre en oeuvre le procédé selon l'une des revendications 1 à 22, lorsque le produit de programme d'ordinateur est exécuté sur un ordinateur.

**25.** Dispositif pour classifier des objets, comportant au moins un capteur optoélectronique (10), de préférence un scanneur laser, qui permet de prendre des images de distance d'une zone de détection avec des pixels de distance (32, 32', 32") qui ont été obtenus par émission d'une impulsion de rayonnement électromagnétique et par détection d'une part de l'impulsion renvoyée comme impulsion écho par un point ou par une zone sur un article (18, 20, 22, 24, 26, 28) ainsi que par détection d'au moins une propriété de l'impulsion écho dépendante de l'énergie de l'impulsion écho, l'énergie de l'impulsion écho étant l'énergie de l'impulsion écho recevable par le capteur (10) et dépendant des propriétés de réémission de la surface du point ou de la zone, pixels de distance auxquels est associée respectivement au moins une valeur pour un paramètre pour la propriété d'impulsion écho, et comportant un système de traitement de données (34) relié au capteur optoélectronique (10), comprenant :

des moyens pour associer des pixels de distance (32, 32', 32") de l'image de distance à au moins un objet, et
des moyens pour associer au moins une classe d'objet à l'objet en fonction de l'une au moins des valeurs de paramètre pour la propriété d'impulsion écho qui sont associées aux pixels de distance associés à l'objet,
classe d'objet pour laquelle est prévu au moins un critère d'association auquel doit satisfaire un objet pour pouvoir associer à celui-ci la classe d'objet,
le critère d'association se référant à l'une au moins des valeurs de paramètre pour la propriété d'impulsion écho, et
plusieurs classes d'objet étant prédéterminées qui se distinguent au moins par le critère d'association par rapport à ladite au moins une valeur de paramètre pour la propriété d'impulsion écho.

Fig. 1

EP 1 557 694 B1

Echopulsbreite EPB

Fig. 2

```
                    ┌─────────────────────────────────────┐
         S10        │   Erfassen und Einlesen eines        │
                    │ Abstandsbildes mit Echopulsbreitenwerten │
                    └─────────────────────────────────────┘
                                    │
                    ┌─────────────────────────────────────┐
         S12        │ Abstandskorrektur der Echopulsbreitenwerte │
                    └─────────────────────────────────────┘
                                    │
                    ┌─────────────────────────────────────┐
         S14        │   Segmentierung des Abstandsbildes   │
                    │   mittels eines Abstandskriteriums   │
                    └─────────────────────────────────────┘
                                    │
                    ┌─────────────────────────────────────┐
                    │ Für jedes Objekt: Zuordnung von Segmenten zu dem │
         S16        │ jeweiligen Objekt auf der Basis prädizierter Lagen und │
                    │        aktueller EPB-Verläufe        │
                    └─────────────────────────────────────┘
                                    │
                    ┌─────────────────────────────────────┐
         S18        │   Bildung neuer Objekte aus noch nicht │
                    │      zugeordneten Segmenten          │
                    └─────────────────────────────────────┘
                                    │
                    ┌─────────────────────────────────────┐
                    │ Ermittlung von Lagen und ggf. Geschwindigkeiten │
         S20        │   der Objekte unter Verwendung von aktuellen │
                    │ EPB-Verläufen sowie Ermittlung/Aktualisierung │
                    │        von EPB-Vergleichsverläufen   │
                    └─────────────────────────────────────┘
                                    │
                    ┌─────────────────────────────────────┐
         S22        │      Klassifizierung neuer Objekte   │
                    └─────────────────────────────────────┘
                                    │
                    ┌─────────────────────────────────────┐
         S24        │ Prädiktion neuer Objektlagen im nächsten Zyklus │
                    └─────────────────────────────────────┘
                                    │
                    ┌─────────────────────────────────────┐
         S26        │ Ausgabe bzw. Speicherung der ermittelten │
                    │ Objektlagen, -geschwindigkeiten und -klassen │
                    └─────────────────────────────────────┘
```

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1094336 A2
- US 20010052844 A1

- DE 10148071

**In der Beschreibung aufgeführte Nicht-Patentliteratur**

- Sensordatenverarbeitung eines Laserscanners für autonome Fahrfunktionen von Kraftfahrzeugen. 2000